# EUROPEAN PATENT SPECIFICATION

(11) **EP 2 938 056 B1**
(45) Date of publication and mention of the grant of the patent: **25.03.2020**
(21) Application number: 15161768.5
(22) Date of filing: 30.03.2015
(51) Int. Cl.: H04N 1/00

(54) **IMAGE PROCESSING APPARATUS**
BILDVERARBEITUNGSVORRICHTUNG
APPAREIL DE TRAITEMENT D'IMAGE

(30) Priority: 24.04.2014 JP 2014089989
(43) Date of publication of application: 28.10.2015
(73) Proprietor: Oki Data Corporation, Tokyo 108-8551 (JP)
(72) Inventor: Urasawa, Koji, Tokyo 108-8551 (JP)
(74) Representative: Piotrowicz, Pawel Jan Andrzej

(56) References cited:
- EP-A2- 2 551 760
- US-A1- 2011 199 629

## Description

### BACKGROUND OF THE INVENTION

### 1. FIELD OF THE INVENTION

The present invention relates to an image processing apparatus having a setting menu (a hierarchized setting menu) with a hierarchical structure.

### 2. DESCRIPTION OF THE RELATED ART

In general, image processing apparatuses, such as image forming apparatuses, have setting menus with hierarchical structures (see, for example, Japanese Patent Application Publication No. 2007-148482).

It is desirable to improve user friendliness of such image processing apparatuses.

US 2011/199629 A1 describes a touch-panel display of an image forming apparatus in which a function selecting area and a preview area are displayed next to each other. On the function selecting area, a function setting menu is displayed in one display mode among an icon mode in which only a group of icons are displayed, a regular mode in which a group of icons and a group of texts are displayed, and an express mode in which a group of icons, a group of texts and a group of function setting buttons are displayed.

EP 2 551 760 A2 describes an operation apparatus including a touch panel, a determination unit, a shrinkage rate calculating unit, a window shrinking unit, and a multi window display unit. The shrinkage rate calculating unit calculates a shrinkage rate allowing equal allocation of space for a predetermined number of setting condition input windows in a display region based on the setting item number, and a size of the display region in a case of displaying only one setting condition input window on the touch panel.

### SUMMARY OF THE INVENTION

An aspect of the present invention is intended to provide an image processing apparatus capable of improving user friendliness.

According to an aspect of the present invention, there is provided an image processing apparatus including a display and a controller that causes the display to display a first setting screen and a second setting screen, the first setting screen including a first setting item name and a plurality of first settings, the second setting screen including a second setting item name and a plurality of second settings related to the plurality of first settings. The controller causes the display to display, together with the first setting screen, the second setting item name of the second setting screen, one of the plurality of second settings, and a change operation portion for changing from the first setting screen to the second setting screen.

Further scope of applicability of the present invention will become apparent from the detailed description given hereinafter. However, it should be understood that the detailed description and specific embodiments, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

In the attached drawings:
FIG. 1 is a block diagram schematically illustrating an example of a physical configuration of an image forming apparatus according to an embodiment of the present invention;
FIG. 2 is a block diagram illustrating in detail an example of a functional configuration of the image forming apparatus in FIG. 1;
FIG. 3 is a schematic diagram illustrating an example of a setting menu used in the image forming apparatus in FIGs. 1 and 2;
FIG. 4 illustrates an example of default parameter information in FIG. 2;
FIG. 5 illustrates an example of current parameter information in FIG. 2;
FIG. 6 is a schematic diagram illustrating an example of a configuration of a home screen in FIG. 3;
FIG. 7 is a schematic diagram illustrating an example of a configuration of a copy screen in FIG. 3;
FIG. 8 is a flowchart illustrating an example of a display control operation when the copy screen in FIG. 7 is operated;
FIG. 9 is a schematic diagram illustrating an example of a configuration of a color mode setting screen in FIG. 3;
FIG. 10 is a schematic diagram illustrating an example of a configuration of a tray selection setting screen in FIG. 3;
FIG. 11 is a schematic diagram illustrating an example of a configuration of an original orientation setting screen in FIG. 3;
FIG. 12 is a schematic diagram illustrating an example of a configuration of a binding margin setting screen in FIG. 3;
FIG. 13 is a schematic diagram illustrating an example of a configuration of an aggregate copy setting screen in FIG. 3;
FIG. 14 is a schematic diagram illustrating an example of a configuration of a two-sided copy setting screen in FIG. 3;
FIG. 15 is a schematic diagram illustrating a configuration of a setting screen of a comparative example;
FIG. 16 is a flowchart illustrating an example of a display control operation for a setting screen in FIG. 8;
FIG. 17 is a schematic diagram illustrating an example of change paths between setting screens in the setting menu in FIG. 3;
FIG. 18 is a schematic diagram illustrating an example in which a change is allowed in the example of FIG. 17;
FIG. 19 is a schematic diagram illustrating an example in which a change is disabled in the example of FIG. 17;
FIG. 20 is a schematic diagram illustrating an example of the two-sided copy setting screen in the example of FIG. 19;
FIG. 21 is a schematic diagram illustrating an example in which a change is disabled in a setting menu of a first modification;
FIG. 22 is a schematic diagram illustrating an example of a temporal sequence of identification data in the example of FIG. 21;
FIG. 23 is a block diagram schematically illustrating an example of a physical configuration of an image forming apparatus according to a second modification;
FIG. 24 is a block diagram schematically illustrating an example of a physical configuration of an image forming apparatus according to a third modification; and
FIG. 25 is a block diagram schematically illustrating an example of a physical configuration of an image forming apparatus according to a fourth modification.

### DETAILED DESCRIPTION OF THE INVENTION

An embodiment of the present invention will now be described with reference to the attached drawings. This embodiment illustrates an image forming apparatus as an example of an image processing apparatus.

### <1. Embodiment>

### <Configuration>

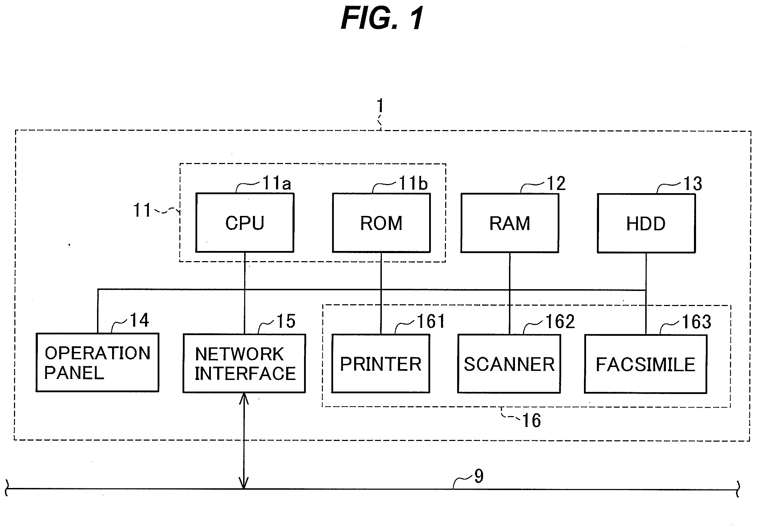

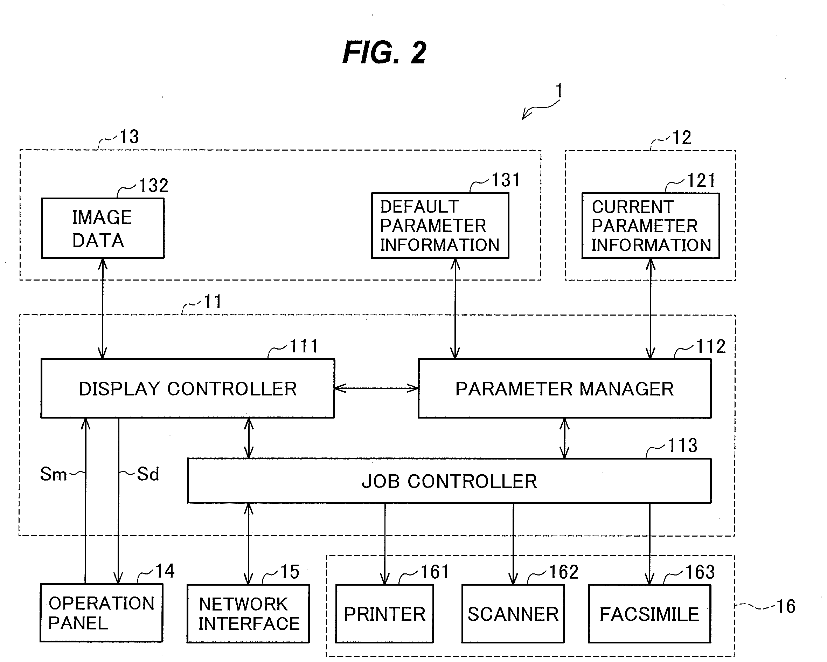

FIG. 1 is a block diagram schematically illustrating an example of a physical configuration of an image forming apparatus 1 according to an embodiment of the present invention. FIG. 2 is a block diagram illustrating in detail an example of a functional configuration of the image forming apparatus 1.

As illustrated in FIGs. 1 and 2, the image forming apparatus 1 includes a central processing unit (CPU) 11a, a read only memory (ROM) 11b, a random access memory (RAM) 12, a hard disk drive (HDD) 13, an operation panel 14, a network interface 15, and an image forming unit 16.

### (Setting Menu)

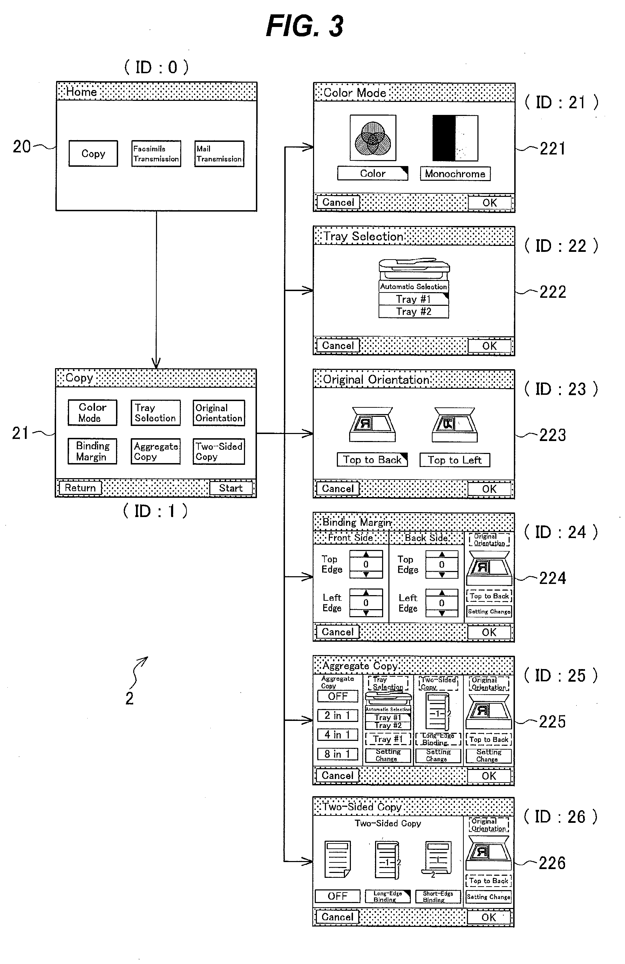

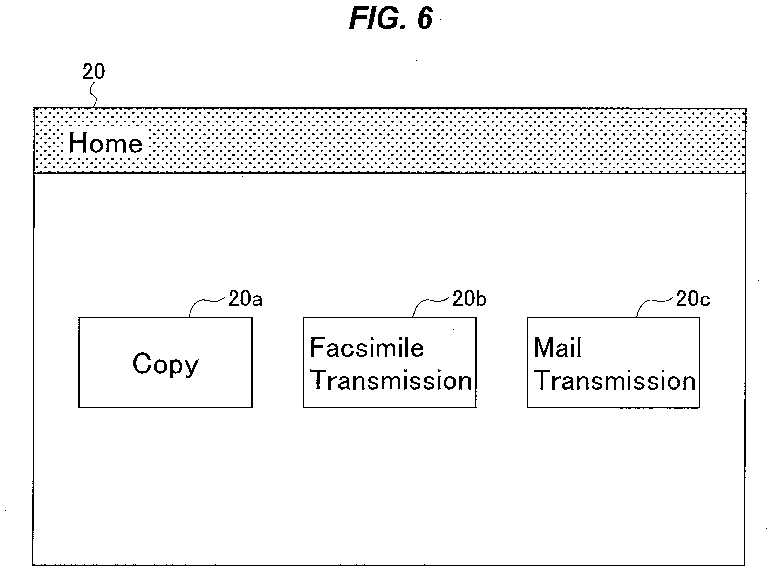

The image forming apparatus 1 has a setting menu 2 with a hierarchical structure. FIG. 3 schematically illustrates an example of the setting menu 2. This setting menu 2 is used for setting or changing various functions, conditions, or the like when the image forming apparatus 1 is used. In this example, the setting menu 2 includes a home screen 20 at an uppermost level (or a first level), a copy screen 21 at an intermediate level (or a second level), and multiple (six) various setting screens at a lowermost level (or a third level). The setting screens include a color mode setting screen 221, a tray selection setting screen 222, an original orientation setting screen 223, a binding margin setting screen 224, an aggregate (or N-up) copy setting screen 225, and a two-sided copy setting screen 226. Examples of the respective screens will be detailed later with reference to FIGs. 6, 7, and 9 to 14.

Each of the screens in the setting menu 2 is assigned a unique identification data (identifier) ID in advance. Specifically, in this example, the home screen 20 is assigned an identification data ID having a value of '0'; the copy screen 21 is assigned an identification data ID having a value of '1'; the color mode setting screen 221 is assigned an identification data ID having a value of '21'; the tray selection setting screen 222 is assigned an identification data ID having a value of '22'; the original orientation setting screen 223 is assigned an identification data ID having a value of '23'; the binding margin setting screen 224 is assigned an identification data ID having a value of '24'; the aggregate copy setting screen 225 is assigned an identification data ID having a value of '25'; the two-sided copy setting screen 226 is assigned an identification data ID having a value of '26'.

The setting menu 2 is an example of a 'hierarchized setting menu' of the present invention. Each of the color mode setting screen 221, tray selection setting screen 222, original orientation setting screen 223, binding margin setting screen 224, aggregate copy setting screen 225, and two-sided copy setting screen 226 is an example of a 'setting screen' of the present invention.

The CPU 11a controls the operation of the entire image forming apparatus 1. The ROM 11b stores various programs for operating the image forming apparatus 1 and data. As illustrated in FIG. 1, the CPU 11a and ROM 11b constitute a controller 11 illustrated in FIG. 2. Specifically, the controller 11 is implemented in such a way that a set of programs stored in the ROM 11b are executed by the CPU 11a. The configuration of the controller 11 will be detailed later.

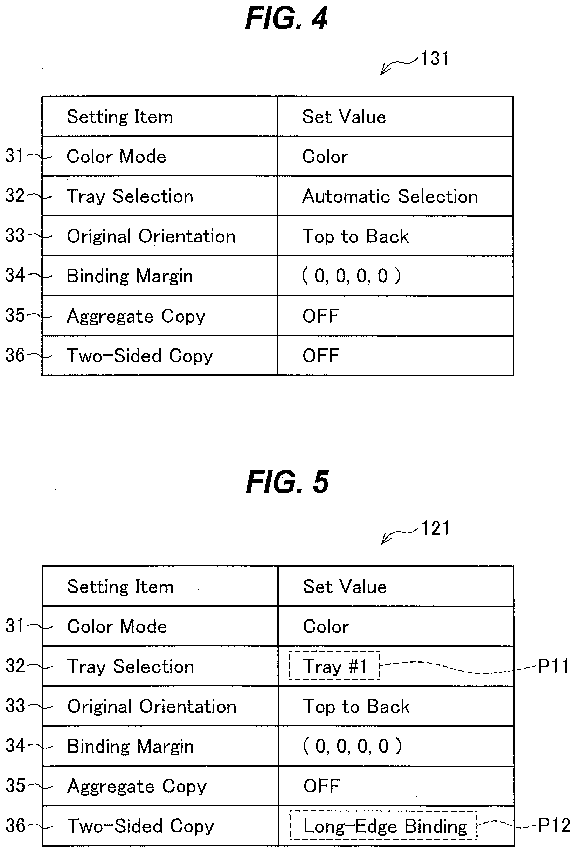

The RAM 12 temporarily stores various information. An example of information that is temporarily generated and stored in the RAM 12 is current parameter information 121 in FIG. 2. The current parameter information 121 includes a set of current values of parameters (setting items) used in processing of various jobs in the image forming unit 16, described later. The current parameter information 121 will be detailed later with reference to FIG. 5.

The HDD 13 permanently stores various information. The information permanently stored in the HDD 13 includes default parameter information 131 and screen data 132 in FIG. 2. The default parameter information 131 includes a set of default values (or initial values) of the parameters used in processing of the various jobs. The default parameter information 131 will be detailed later with reference to FIG. 4. The screen data 132 are image data, such as layout data and object (or icon) data, used in drawing or displaying the above-described respective screens on the operation panel 14, described later. In place of the HDD 13, other various types of storage media (or storage devices) such as a semiconductor memory may be used.

### (Default Parameter Information and Current Parameter Information)

The default parameter information 131 and current parameter information 121 will now be detailed with reference to FIGs. 4 and 5. FIG. 4 illustrates an example of the default parameter information 131; FIG. 5 illustrates an example of the current parameter information 121.

As illustrated in FIGs. 4 and 5, each of the default parameter information 131 and current parameter information 121 has setting items (basic setting items 41, described later) in the above-described various setting screens and various parameters corresponding to set values (or settings) of the setting items. Specifically, each of the default parameter information 131 and current parameter information 121 has, as the setting items, a setting item "Color Mode' 31 in the color mode setting screen 221, a setting item 'Tray Selection' 32 in the tray selection setting screen 222, a setting item 'Original Orientation' 33 in the original orientation setting screen 223, a setting item 'Binding Margin' 34 in the binding margin setting screen 224, a setting item 'Aggregate Copy' 35 in the aggregate copy setting screen 225, and a setting item 'Two-Sided Copy' 36 in the two-sided copy setting screen 226.

In FIG. 4, the default parameter information 131 has set values (initial values) of the setting items as follows:
'Color Mode' 31 = 'Color';
'Tray Selection' 32 = 'Automatic Selection';
'Original Orientation' 33 = 'Top to Back';
'Binding Margin' 34 = (0, 0, 0, 0);
'Aggregate Copy' 35 = 'Off'; and
'Two-Sided Copy' 36 = 'Off'.

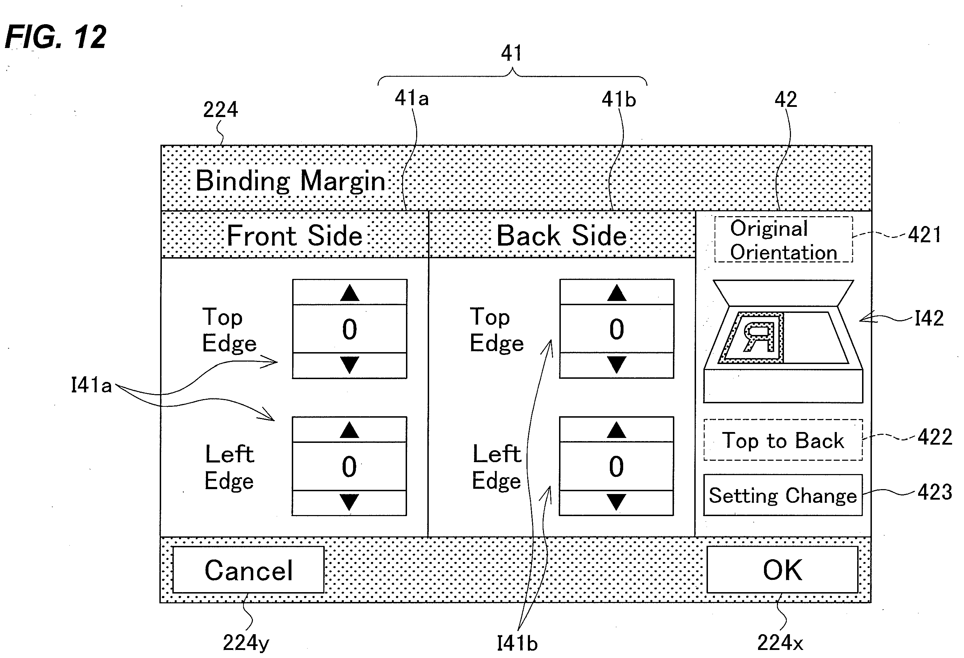

Regarding 'Binding Margin' 34, the first, second, third, and fourth values indicate respectively a top margin of a front side, a left margin of the front side, a top margin of a back side, and a left margin of the back side (see FIG. 12). Each of the set values 'Off' indicates a disabled state.

In FIG. 5, the current parameter information 121 has set values (current values) of the setting items as follows:
'Color Mode' 31 = 'Color';
'Tray Selection' 32 = 'Tray #1';
'Original Orientation' 33 = 'Top to Back';
'Binding Margin' 34 = (0, 0, 0, 0);
'Aggregate Copy' 35 = 'Off'; and
'Two-Sided Copy' 36 = 'Long-Edge Binding'.

In this example, as indicated by characters P11 and P12 in FIG. 5, the set values of 'Tray Selection' 32 and 'Two-Sided Copy' 36 in the current parameter information 121 have been changed from those in the default parameter information 131. The current parameter information 121 includes set values (current values) that are initially equal to those in the default parameter information 131 and changed by a user as needed.

As illustrated in FIG. 2, the operation panel 14 has a function (operation input function) of generating an operation signal Sm in response to operation by a user of the image forming apparatus 1 and supplying the operation signal Sm to the controller 11 (a display controller 111, described later). The operation panel 14 also has a function (image display function) of displaying the above-described setting screens (see FIG. 3) in the setting menu 2 under display control by the controller 11 (the display controller 111). Specifically, the operation panel 14 displays the setting screens according to a display control signal Sd supplied from the controller 11. The operation panel 14 is configured using, for example, a touch screen. Here, various types of touch screens, such as one using a liquid crystal display, an organic electro-luminescence (EL) display, or the like, may be used.

As illustrated in FIG. 1, the network interface 15 transmits and receives various data via an external network 9 by using known communication techniques. The network 9 may be a wired network or a wireless network.

### (Image Forming Unit)

In the example of FIGs. 1 and 2, the image forming unit 16 includes a printer 161, a scanner 162, and a facsimile 163. That is, the image forming unit 16 has multiple functions including a print function, a scan function, and a facsimile function.

The printer 161 has a print function, and prints an image on a printing medium, such as a paper medium, by using any of known various printing techniques.

The scanner 162 has a scan function, and reads image data from an object, such as a paper medium, to be read by using any of known various optical reading techniques.

The facsimile 163 has a facsimile function, and transmits and receives image data via telephone lines in the network 9 by using any of known various communication techniques.

### (Controller)

Next, an example of the functional configuration of the controller 11 will be detailed with reference to FIG. 2.

The controller 11 controls, on the basis of an operation signal Sm supplied from the operation panel 14, display of the setting screens (the color mode setting screen 221, tray selection setting screen 222, original orientation setting screen 223, binding margin setting screen 224, aggregate copy setting screen 225, and two-sided copy setting screen 226) in the setting menu 2. Specifically, the controller 11 controls display of the setting screens on the operation panel 14 by using the above-described various data (the screen data 132, current parameter information 121, and the like) to generate a display control signal Sd and output the display control signal Sd to the operation panel 14.

In FIG. 2, the controller 11 includes the display controller 111, a parameter manager 112, and a job controller 113.

The display controller 111 generates a display control signal Sd using an operation signal Sm, screen data 132, current parameter information 121, and the like and outputs the display control signal Sd to the operation panel 14, cooperating with the parameter manager 112 and job controller 113.

The parameter manager 112 manages various parameters, such as the default parameter information 131 and current parameter information 121, used in processing of various jobs in the image forming unit 16.

The job controller 113 uses the various parameters (e.g., the current parameter information 121) managed by the parameter manager 112 to causes the image forming unit 16 to execute various job processes such as image processing. Specifically, the job controller 113 individually controls execution of various job processes in the printer 161, scanner 162, and facsimile 163 in the image forming unit 16.

In this embodiment, when displaying one setting screen of the multiple setting screens 221 to 226 in the setting menu 2, the controller 11 controls the display as follows. When a basic setting item 41 (described later) of another setting screen of the multiple setting screens is associated with a basic setting item 41 of the one setting screen, as a related setting item 42 (described later) that is a setting item related to the basic setting item 41 of the one setting screen, the controller 11 controls the display so that a subject 421 (described later) and a setting (or setting content) 422 (described later) of the related setting item 42 are displayed in the one setting screen together with the basic setting item 41 (or a subject and a setting of the basic setting item 41) of the one setting screen. This display control operation by the controller 11 will be detailed later.

### <Effects and Advantages>

### (A. Basic Operation)

Referring to FIG. 2, in the image forming apparatus 1, the job controller 113 uses the various parameters (e.g., the current parameter information 121) managed by the parameter manager 112 to control the image forming unit 16 to execute the various job processes. Thereby, the printer 161, scanner 162, and facsimile 163 in the image forming unit 16 execute the print function, scanner function, and facsimile function, carrying out image forming operations.

In response to operation to the operation panel 14 by a user, the operation panel 14 generates an operation signal Sm and supplies the operation signal Sm to the display controller 111 in the controller 11. The display controller 111 generates a display control signal Sd by using the operation signal Sm, screen data 132, current parameter information 121, and the like, and outputs the display control signal Sd to the operation panel 14. According to the display control signal Sd, the operation panel 14 displays the setting screens (see FIG. 3) in the setting menu 2. In this way, the controller 11 (the display controller 111) performs display control for the setting screens on the operation panel 14.

### (B. Display Control Operation for Home Screen and Copy Screen)

Next, the operation of display control for the home screen 20 and copy screen 21 by the controller 11 will be described with reference to FIGs. 6 to 8.

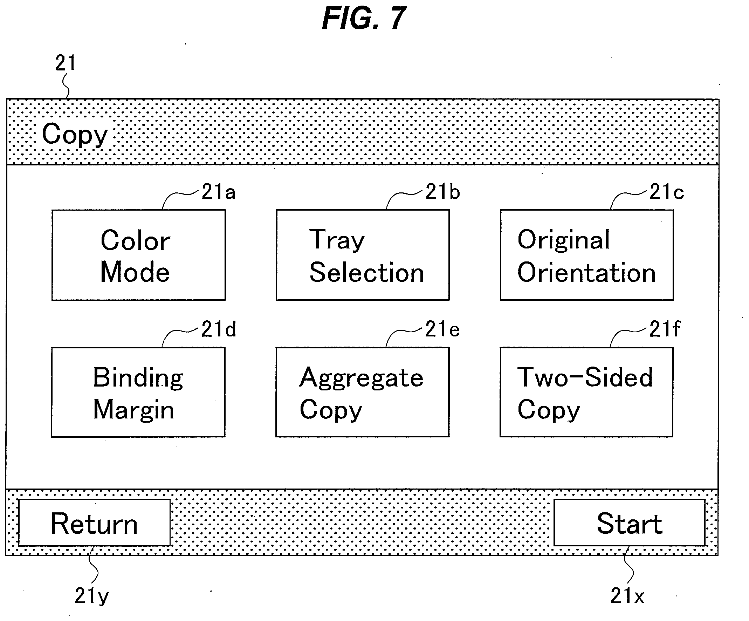

FIG. 6 schematically illustrates an example of the configuration (or display) of the home screen 20 in FIG. 3. FIG. 7 schematically illustrates an example of the configuration of the copy screen 21 in FIG. 3.

### (Home Screen)

First, the controller 11 controls the display so that the home screen 20 of FIG. 6 is displayed on the operation panel 14. Specifically, the controller 11 controls the display so that a copy button 20a, a facsimile transmission button 20b, and a mail transmission button 20c are arranged in the home screen 20. The copy button 20a, facsimile transmission button 20b, and mail transmission button 20c are for displaying (or changing the displayed screen to) screens for setting a copy function, a facsimile transmission function, and a mail transmission function of the image forming apparatus 1, respectively. For example, when the copy button 20a is pressed by a user, the controller 11 controls the display to change to the screen (the copy screen 21) for setting the copy function.

### (Copy Screen)

That is, the controller 11 controls the display so that the copy screen 21 of FIG. 7 is displayed on the operation panel 14. Specifically, the controller 11 controls the display so that a color mode button 21a, a tray selection button 21b, an original orientation button 21c, a binding margin button 21d, an aggregate copy button 21e, and a two-sided copy button 21f are arranged in the copy screen 21. The buttons 21a, 21b, 21c, 21d, 21e, and 21f are for displaying the color mode setting screen 221, tray selection setting screen 222, original orientation setting screen 223, binding margin setting screen 224, aggregate copy setting screen 225, and two-sided copy setting screen 226 of FIG. 3, respectively. Hereinafter, these buttons will be collectively referred to as the 'setting screen display buttons'.

Further, as illustrated in FIG. 7, the controller 11 controls the display so that a start button 21x and a return button 21y are displayed in the copy screen 21 (at a lower right portion and a lower left portion, respectively, in this example). The start button 21x is for starting copying (a job process of the copy function) by the image forming unit 16. The return button 21y is for returning to the home screen 20 (i.e., displaying the home screen 20 again) without executing copying.

### (Specific Display Control Operation)

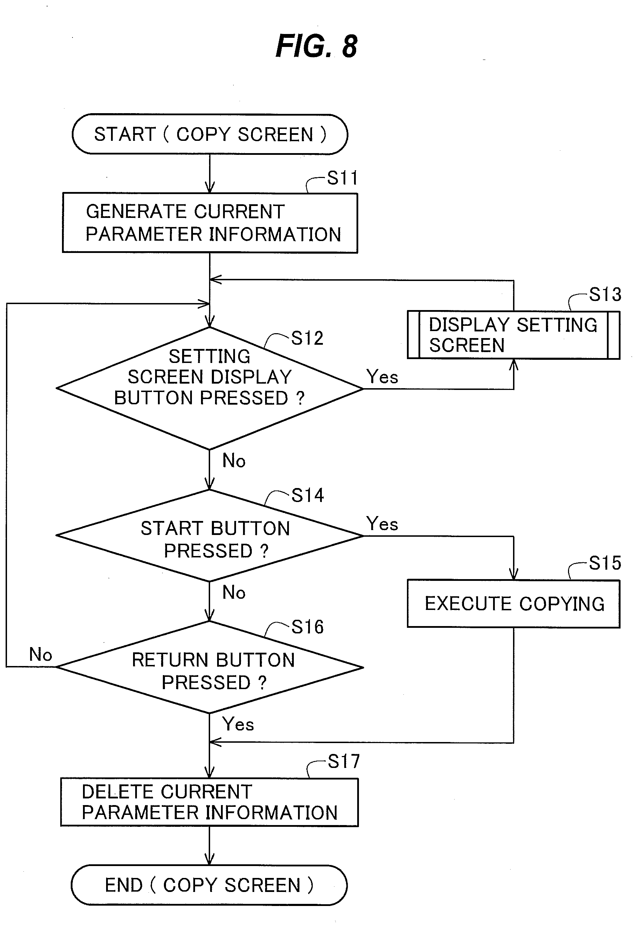

FIG. 8 is a flowchart illustrating an example of the display control operation by the controller 11 when the copy screen 21 is operated by a user.

First, the display controller 111 in the controller 11 requests the parameter manager 112 to generate current parameter information 121 (e.g., see FIG. 5) at the present time. On request, the parameter manager 112 generates current parameter information 121 at the present time in the RAM 12 with the content of the default parameter information 131 (e.g., see FIG. 4) in the HDD 13 as the initial values (step S11).

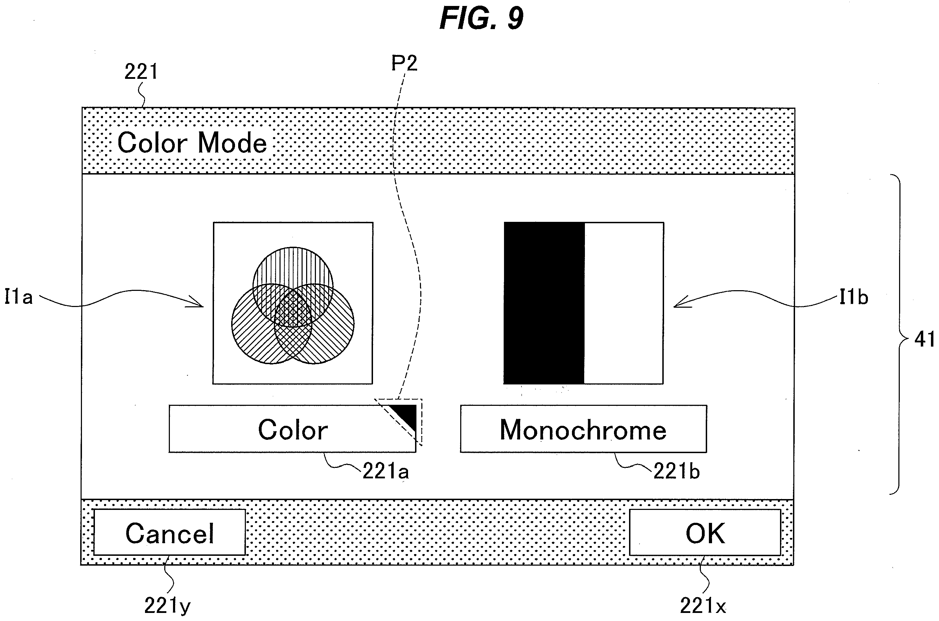

Next, the display controller 111 determines, on the basis of the operation signal Sm, whether one of the setting screen display buttons in the copy screen 21 has been pressed by a user (step S12). If it is determined that one of the setting screen display buttons has been pressed (Yes in step S12), the display controller 111 controls the display so that the setting screen (e.g., one of the setting screens in FIG. 3) corresponding to the pressed setting screen display button is displayed (step S13). An example of the display control operation in this step for each setting screen will be described later with reference to FIGs. 9 to 14 and 16.

On the other hand, if it is determined that no setting screen display button has been pressed (No in step S12), the display controller 111 determines, on the basis of the operation signal Sm, whether the start button 21x in the copy screen 21 has been pressed by a user (step S14). If it is determined that the start button 21x has been pressed (Yes in step S14), the display controller 111 requests the job controller 113 to execute copying. On request, the job controller 113 uses the current parameter information 121 managed by the parameter manager 112 to perform job control so that the scanner 162 and printer 161 in the image forming unit 16 execute copying (step S15). Upon completion of the execution of copying, the job controller 113 notifies the display controller 111 of completion of copying.

When the display controller 111 receives the notification of completion of copying, it requests the parameter manager 112 to delete the current parameter information 121. On request, the parameter manager 112 deletes the current parameter information 121 from the RAM 12 (step S17). Then, the display controller 111 controls the display to return to the home screen 20 (i.e., display the home screen 20 again), and the display control operation for the copy screen 21 in FIG. 8 ends.

On the other hand, if it is determined that the start button 21x has not been pressed (No in step S14), the display controller 111 determines, on the basis of the operation signal Sm, whether the return button 21y in the copy screen 21 has been pressed by a user (step S16). If it is determined that the return button 21y has not been pressed (No in step S16), the procedure returns to step S12. On the other hand, if it is determined that the return button 21y has been pressed (Yes in step S16), the display controller 111 requests the parameter manager 112 to delete the current parameter information 121 without executing copying. On request, the parameter manager 112 deletes the current parameter information 121 from the RAM 12 (step S17). Then, the display controller 111 controls the display to return to the home screen 20, and the display control operation for the copy screen 21 in FIG. 8 ends.

### (C. Display Control Operation for Setting Screens)

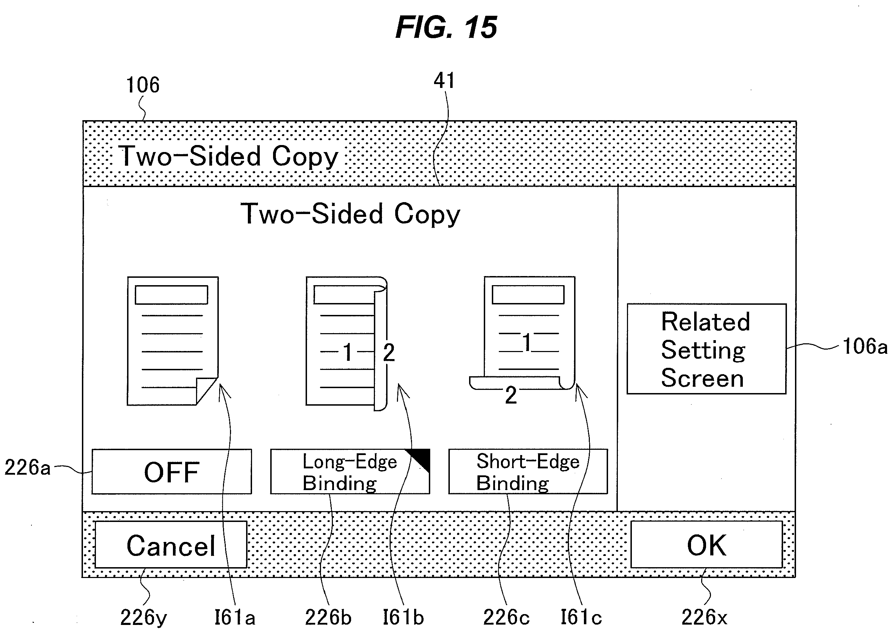

Next, the operation of display control for each of the setting screens by the controller 11 will be described with reference to FIGs. 9 to 20 in comparison with a comparative example in FIG. 15.

### (C-1. Examples of Display of Setting Screens)

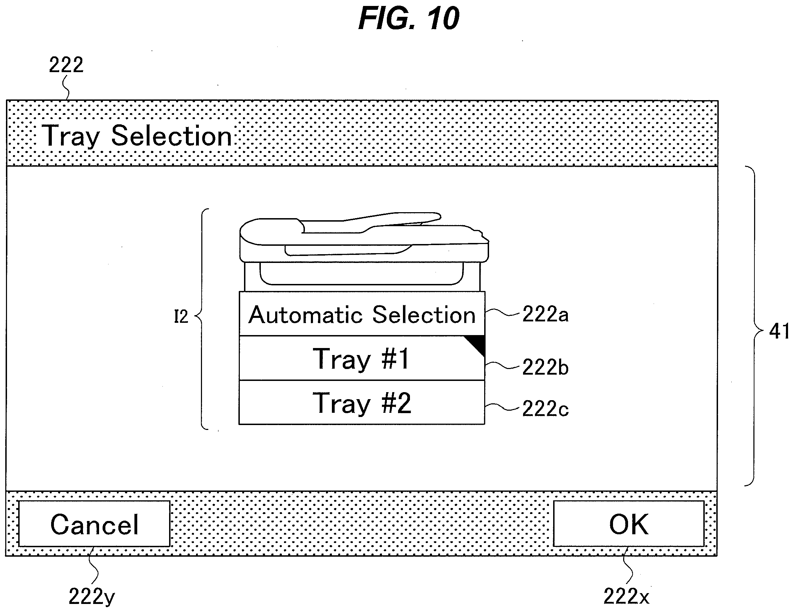

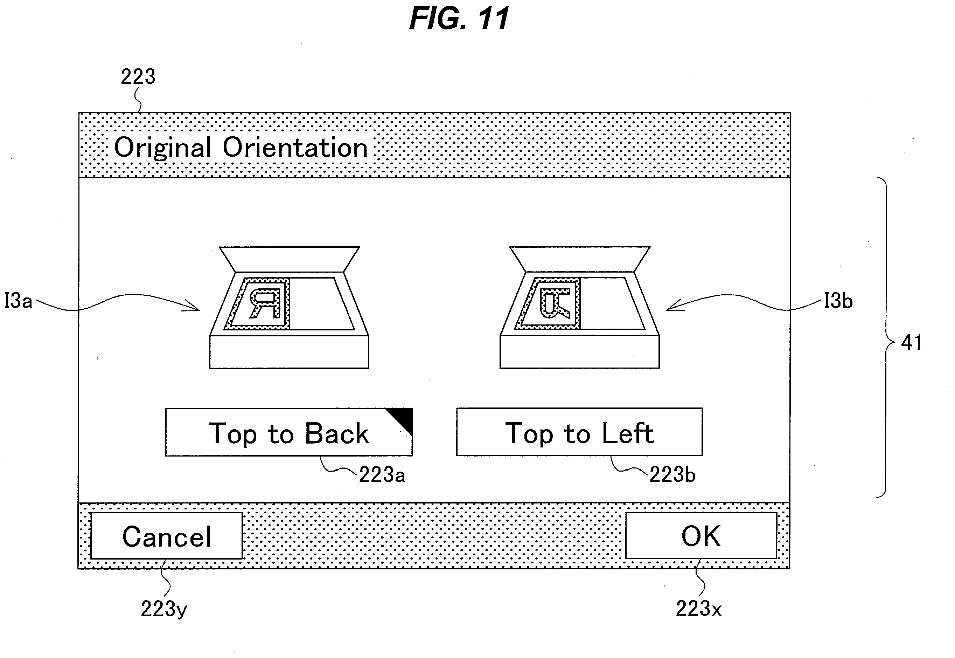

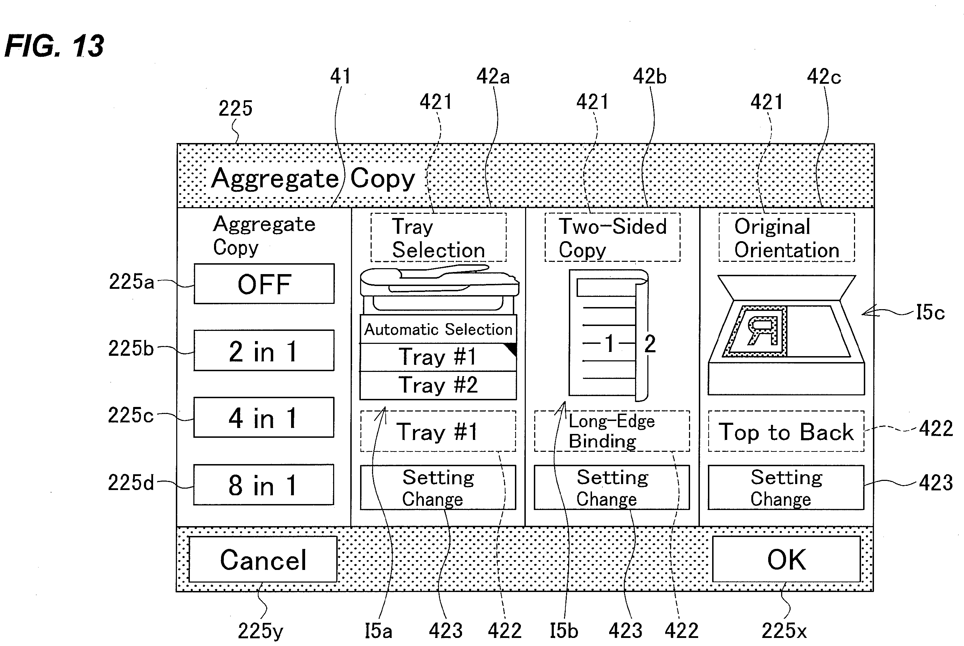

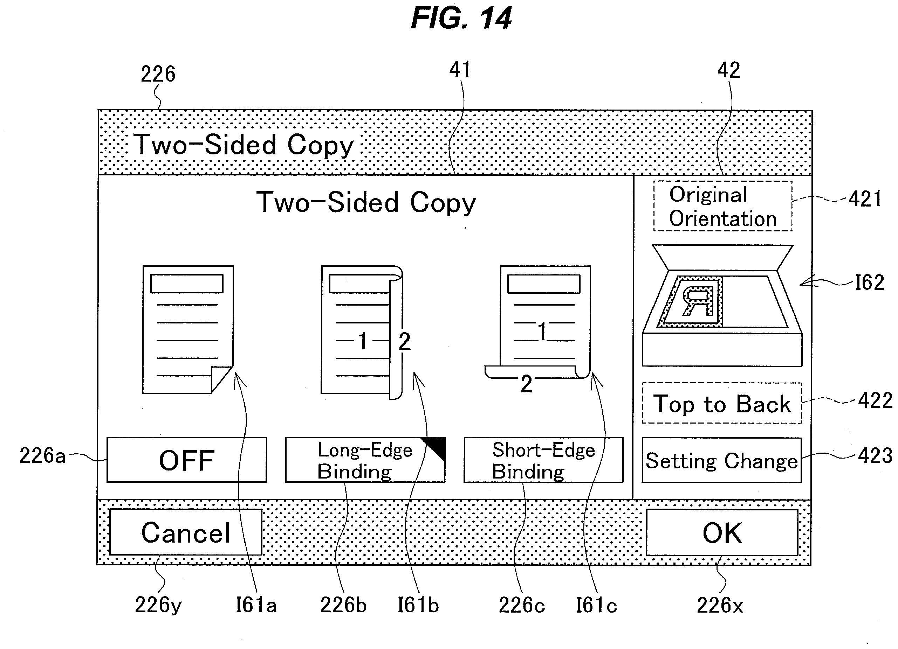

FIG. 9 schematically illustrates an example of the configuration (or display) of the color mode setting screen 221 in FIG. 3; FIG. 10 schematically illustrates an example of the configuration of the tray selection setting screen 222 in FIG. 3; FIG. 11 schematically illustrates an example of the configuration of the original orientation setting screen 223 in FIG. 3; FIG. 12 schematically illustrates an example of the configuration of the binding margin setting screen 224 in FIG. 3; FIG. 13 schematically illustrates an example of the configuration of the aggregate copy setting screen 225 in FIG. 3; FIG. 14 schematically illustrates an example of the configuration of the two-sided copy setting screen 226 in FIG. 3.

### (Color Mode Setting Screen)

When the color mode button 21a is pressed by a user, the controller 11 controls the display so that the color mode setting screen 221 of FIG. 9 is displayed on the operation panel 14. Specifically, the controller 11 controls the display so that a color button 221a and a monochrome button 221b are arranged in the color mode setting screen 221. These buttons 221a and 221b are for setting the mode of the image forming apparatus 1 in copying to a color copy mode and a monochrome (or black-and-white) copy mode, respectively. The setting item regarding the color copy mode and monochrome copy mode is a basic setting item 41 of the color mode setting screen 221. The black triangle mark indicated by character P2 in FIG. 9 at the upper right corner of the color button 221a indicates that the color button 221a is currently selected, and the color copy mode corresponding to the selected color button 221a is currently set. That is, the black triangle mark indicates the currently set mode (or the current setting). The same applies to the other setting screens described later.

Further, as illustrated in FIG. 9, the controller 11 controls the display so that objects I1a and I1b are displayed near (above, in this example) the color button 221a and monochrome button 221b, respectively. The objects I1a and I1b respectively represent the color copy mode and monochrome copy mode in such a way as to allow a user to perceive them intuitively. Each of the objects I1a and I1b may be a graphic object, representation, or image. The same applies to the other objects described below.

Further, as illustrated in FIG. 9, the controller 11 controls the display so that an OK button 221x and a Cancel button 221y are displayed in the color mode setting screen 221 (at a lower right portion and a lower left portion, respectively, in this example). The OK button 221x is for confirming a setting change on the color mode setting screen 221. The Cancel button 221y is for returning to the copy screen 21 (i.e., displaying the copy screen 21 again) without confirming (or while cancelling) a setting change on the color mode setting screen 221.

### (Tray Selection Setting Screen)

When the tray selection button 21b is pressed by a user, the controller 11 controls the display so that the tray selection setting screen 222 of FIG. 10 is displayed on the operation panel 14. Specifically, the controller 11 controls the display so that an automatic selection button 222a, a tray #1 button 222b, and a tray #2 button 222c are arranged in the tray selection setting screen 222. These buttons 222a, 222b, and 222c are for setting which tray is used to supply sheets of paper for printing when copying is executed by the image forming apparatus 1. The setting item regarding which tray is used to supply sheets of paper for printing (or tray selection) is a basic setting item 41 of the tray selection setting screen 222.

Further, as illustrated in FIG. 10, the controller 11 controls the display so that an object I2 is displayed together with the automatic selection button 222a, tray #1 button 222b, and tray #2 button 222c. The object 12 represents which tray is used to supply sheets of paper for printing in such a way as to allow a user to perceive it intuitively.

Further, as illustrated in FIG. 10, the controller 11 controls the display so that an OK button 222x and a Cancel button 222y are displayed in the tray selection setting screen 222 (at a lower right portion and a lower left portion, respectively, in this example). The OK button 222x is for confirming a setting change on the tray selection setting screen 222. The Cancel button 222y is for returning to the copy screen 21 without confirming a setting change on the tray selection setting screen 222.

### (Original Orientation Setting Screen)

When the original orientation button 21c is pressed by a user, the controller 11 controls the display so that the original orientation setting screen 223 of FIG. 11 is displayed on the operation panel 14. Specifically, the controller 11 controls the display so that a 'Top to Back' button 223a and a 'Top to Left' button 223b are arranged in the original orientation setting screen 223. These buttons 223a and 223b are for setting an orientation of placement of an original (or a document) to be copied, such as a sheet of paper, when copying is executed by the image forming apparatus 1. The setting item regarding the orientation of placement of an original (or original orientation) is a basic setting item 41 of the original orientation setting screen 223.

Further, as illustrated in FIG. 11, the controller 11 controls the display so that objects I3a and I3b are displayed together with the 'Top to Back' button 223a and 'Top to Left' button 223b. Each of the objects I3a and I3b represents an orientation of placement of an original in such a way as to allow a user to perceive it intuitively. In addition to such an orientation of placement of an original (the basic setting item 41), each of the objects I3a and I3b also represents guidance for using the image forming apparatus 1. Specifically, as illustrated in FIG. 11, with respect to the orientation of placement of an original to be copied, the objects I3a and I3b respectively represent the placement orientation indicated by 'Top to Back' and 'Top to Left' in such a way as to allow a user to perceive them intuitively. This allows a user to perceive the basic setting item 41 of the original orientation setting screen 223 more intuitively, improving user friendliness. Each of the objects I3a and I3b is an example of a 'third object' of the present invention.

Further, as illustrated in FIG. 11, the controller 11 controls the display so that an OK button 223x and a Cancel button 223y are displayed in the original orientation setting screen 223 (at a lower right portion and a lower left portion, respectively, in this example). The OK button 223x is for confirming a setting change on the original orientation setting screen 223. The Cancel button 223y is for returning to the copy screen 21 without confirming a setting change on the original orientation setting screen 223.

When the controller 11 displays one of the setting screens of FIGs. 12 to 14, it controls the display so that the content of a related setting item 42 that is a setting item associated with the basic setting item 41 of the one setting screen is displayed together with the basic setting item 41 of the one setting screen. The related setting item 42, which will be detailed later, is the basic setting item 41 of another setting screen differing from the currently displayed setting screen.

### (Binding Margin Setting Screen)

When the binding margin button 21d is pressed by a user, the controller 11 controls the display so that the binding margin setting screen 224 of FIG. 12 is displayed on the operation panel 14. Specifically, the controller 11 controls the display so that objects 141a and 141b are arranged in the binding margin setting screen 224. These buttons 141a and 141b are for setting binding margins (or blank space at the periphery of a sheet of paper) on each of a front side and a back side of a sheet of paper subjected to printing in copying. Specifically, as illustrated in FIG. 12, the object 141a consists of buttons for setting binding margins (at the top edge and left edge) on the front side of a sheet of paper. The object 141b consists of buttons for setting binding margins (at the top edge and left edge) on the back side of a sheet of paper. The setting item regarding the binding margins of a sheet of paper is a basic setting item 41 of the binding margin setting screen 224. Specifically, as illustrated in FIG. 12, the setting item regarding the binding margins on the front side of a sheet of paper, which is set by using the object I41a, is a basic setting item 41a The setting item regarding the binding margins on the back side of a sheet of paper, which is set by using the object I41b, is a basic setting item 41b.

Further, the controller 11 controls the display so that the content of a related setting item 42 that is a setting item associated with the basic setting item 41 of the binding margin setting screen 224 is displayed together with the basic setting item 41 of the binding margin setting screen 224. Specifically, in FIG. 12, the basic setting item 41 (setting item for the original orientation) of the original orientation setting screen 223 is associated with the basic setting item 41 (setting item for the binding margins of a sheet of paper) of the binding margin setting screen 224, as a related setting item 42 with respect to the basic setting item 41 of the binding margin setting screen 224. Specifically, as illustrated in FIG. 12, the controller 11 controls the display so that a subject 421 (text information 'Original Orientation') and setting 422 (text information 'Top to Back') of the related setting item 42 are displayed in the binding margin setting screen 224.

The binding margin setting screen 224 is an example of 'one setting screen' of the present invention; the original orientation setting screen 223 is an example of 'another setting screen' of the present invention.

Further, the controller 11 controls the display so that the subject 421 and setting 422 of the related setting item 42 are displayed using (together with, in this example) an object 142 as illustrated in FIG. 12. This allows a user to perceive the subject 421 and setting 422 of the related setting item 42 more intuitively, improving user friendliness. Similarly to the objects I3a and I3b, the object 142 represents guidance for using the image forming apparatus 1 in addition to the orientation of placement of an original, thereby improving user friendliness. The object 142 is an example of a 'second object' and the 'third object' of the present invention.

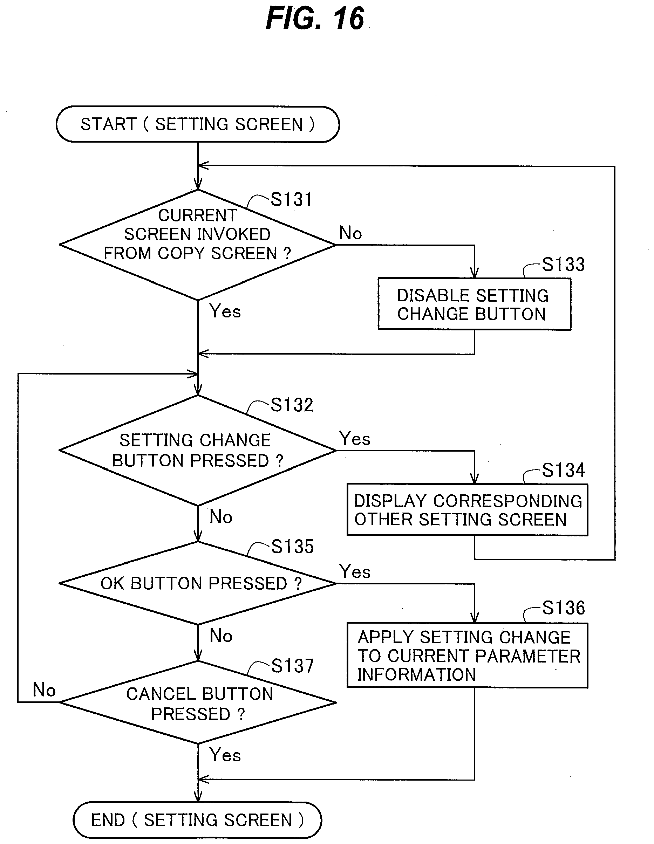

Further, as illustrated in FIG. 12, the controller 11 controls the display so that a setting change button (or change operation button) 423 is displayed in the binding margin setting screen 224. The setting change button 423 is for executing a change (or screen switchover) from the binding margin setting screen 224 to the original orientation setting screen 223. In this example, as illustrated in FIG. 12, the setting change button 423 is configured using an object in the form of a button. The display of the setting change button 423 in the binding margin setting screen 224 enables a direct change to the other setting screen (the original orientation setting screen 223) to which the related setting item 42 belongs, without up-and-down movement in the hierarchized structure of the setting menu 2, which will be detailed later with reference to FIG. 16. Thus, it becomes possible to directly move from the binding margin setting screen 224 to the original orientation setting screen 223 without passing through the copy screen 21 at an upper level. This reduces the number of operation steps by a user, further improving user friendliness. The setting change button 423 is an example of a 'change operation portion' and a 'first object in the form of a button' of the present invention. The same applies to the other setting change buttons 423 described below.

Further, as illustrated in FIG. 12, the controller 11 controls the display so that an OK button 224x and a Cancel button 224y are displayed in the binding margin setting screen 224 (at a lower right portion and a lower left portion, respectively, in this example). The OK button 224x is for confirming a setting change on the binding margin setting screen 224. The Cancel button 224y is for returning to the copy screen 21 without confirming a setting change on the binding margin setting screen 224.

### (Aggregate Copy Setting Screen)

When the aggregate copy button 21e is pressed by a user, the controller 11 controls the display so that the aggregate copy setting screen 225 of FIG. 13 is displayed on the operation panel 14. Specifically, the controller 11 controls the display so that an off button 225a, a '2 in 1' button 225b, a '4 in 1' button 225c, and an '8 in 1' button 225d are arranged in the aggregate copy setting screen 225. These buttons 225a, 225b, 225c, and 225d are for setting aggregate copy to copy multiple originals onto one sheet of paper in the image forming apparatus 1. Specifically, the off button 225a is for disabling the aggregate copy function. The '2 in 1' button 225b, '4 in 1' button 225c, and '8 in 1' button 225d are for making a setting so that two, four, and eight originals are aggregated into one sheet of paper, respectively. The setting item regarding the aggregate copy is a basic setting item 41 of the aggregate copy setting screen 225.

Further, the controller 11 controls the display so that the content of related setting items that are setting items associated with the basic setting item 41 of the aggregate copy setting screen 225 is displayed together with the basic setting item 41 of the aggregate copy setting screen 225. Specifically, in this example, as illustrated in FIG. 13, three related setting items 42a, 42b, and 42c, described below, are displayed in association with the basic setting item 41 of the aggregate copy setting screen 225. Specifically, the basic setting item (setting item regarding the tray selection) 41 of the tray selection setting screen 222 is associated with the basic setting item (setting item regarding the aggregate copy) 41 of the aggregate copy setting screen 225, as a related setting item 42a with respect to the basic setting item 41 of the aggregate copy setting screen 225. The basic setting item (setting item regarding the two-sided copy) 41 of the two-sided copy setting screen 226, described later, is also associated with the basic setting item 41 of the aggregate copy setting screen 225, as a related setting item 42b with respect to the basic setting item 41 of the aggregate copy setting screen 225. Further, the basic setting item (setting item regarding the original orientation) 41 of the original orientation setting screen 223 is associated with the basic setting item 41 of the aggregate copy setting screen 225, as a related setting item 42c with respect to the basic setting item 41 of the aggregate copy setting screen 225.

In this case, the aggregate copy setting screen 225 is an example of 'one setting screen' of the present invention. Each of the tray selection setting screen 222, two-sided copy setting screen 226, and original orientation setting screen 223 is an example of 'another setting screen' of the present invention.

As illustrated in FIG. 13, the controller 11 controls the display so that a subject 421 and a setting 422 of each of the related setting items 42a, 42b, and 42c are displayed in the aggregate copy setting screen 225. Specifically, the controller 11 controls the display so that the subject (text information 'Tray Selection') 421 and setting (text information 'Tray #1', in this example) 422 of the related setting item 42a are displayed. The controller 11 controls the display so that the subject (text information 'Two-Sided Copy') 421 and setting (text information 'Long-Edge Binding', in this example) 422 of the related setting item 42b are displayed. The controller 11 controls the display so that the subject (text information 'Original Orientation') 421 and setting (text information 'Top to Back', in this example) 422 of the related setting item 42c are displayed.

Further, the controller 11 controls the display so that the subjects 421 and settings 422 of the related setting items 42a, 42b, and 42c are displayed using (together with, in this example) objects I5a, I5b, and I5c as illustrated in FIG. 13, respectively. This allows a user to perceive the subjects 421 and settings 422 of the related setting items 42a, 42b, and 42c more intuitively, improving user friendliness. In particular, similarly to the objects I3a, I3b, and 142, the object I5c represents guidance for using the image forming apparatus 1 in addition to the orientation of placement of an original, thereby improving user friendliness. Each of the objects I5a, I5b, and I5c is an example of the 'second object' of the present invention; the object I5c is an example of the 'third object' of the present invention.

Further, as illustrated in FIG. 13, the controller 11 controls the display so that three setting change buttons 423 are displayed in the aggregate copy setting screen 225. The three setting change buttons 423 are for executing a change (screen switchover) from the aggregate copy setting screen 225 to one of the setting screens to which the related setting items 42a, 42b, and 42c belong. Specifically, the three setting change buttons 423 include: a setting button 423 for executing a change from the aggregate copy setting screen 225 to the setting screen (the tray selection setting screen 222) to which the related setting item 42a belongs; a setting button 423 for executing a change from the aggregate copy setting screen 225 to the setting screen (the two-sided copy setting screen 226) to which the related setting item 42b belongs; and a setting button 423 for executing a change from the aggregate copy setting screen 225 to the setting screen (the original orientation setting screen 223) to which the related setting item 42c belongs. In this example, as illustrated in FIG. 13, each of the setting change button 423 is configured using an object in the form of a button. The display of the setting change buttons 423 in the aggregate copy setting screen 225 enables direct changes to the other setting screens (described above) to which the related setting items 42a, 42b, and 42c belong, without up-and-down movement in the hierarchized structure of the setting menu 2, which will be detailed later with reference to FIG. 16. This reduces the number of operation steps by a user, further improving user friendliness.

Further, as illustrated in FIG. 13, the controller 11 controls the display so that an OK button 225x and a Cancel button 225y are displayed in the aggregate copy setting screen 225 (at a lower right portion and a lower left portion, respectively, in this example). The OK button 225x is for confirming a setting change on the aggregate copy setting screen 225. The Cancel button 225y is for returning to the copy screen 21 without confirming a setting change on the aggregate copy setting screen 225.

### (Two-Sided Copy Setting Screen)

When the two-sided copy button 21f is pressed by a user, the controller 11 controls the display so that the two-sided copy setting screen 226 of FIG. 14 is displayed on the operation panel 14. Specifically, the controller 11 controls the display so that an off button 226a, a long-edge binding button 226b, and a short-edge binding button 226c are arranged in the two-sided copy setting screen 226. These buttons 226a, 226b, and 226c are for setting two-sided copy in the image forming apparatus 1. Specifically, the off button 226a is for disabling the function of the two-sided copy. The long-edge binding button 226b and short-edge binding button 226c are for setting an edge (a long edge or a short edge) to be bound in two-sided copying. The setting item regarding the two-sided copy is a basic setting item 41 of the two-sided copy setting screen 226.

Further, as illustrated in FIG. 14, the controller 11 controls the display so that objects I61a, I61b, and I61c are displayed together with the off button 226a, long-edge binding button 226b, and short-edge binding button 226c.- The objects I61a, I61b, and I61c represent single-sided copy, two-sided copy of long-edge binding, and two-sided copy of short-edge binding, respectively, in such a way as to allow a user to perceive it intuitively.

Further, the controller 11 controls the display so that the content of a related setting item 42 that is a setting item associated with the basic setting item of the two-sided copy setting screen 226 is displayed together with the basic setting item 41 of the two-sided copy setting screen 226. Specifically, in this example, as illustrated in FIG. 14, the basic setting item (setting item regarding the original orientation) 41 of the original orientation setting screen 223 is associated with the basic setting item (setting item regarding the two-sided copy) 41 of the two-sided copy setting screen 226, as a related setting item 42 with respect to the basic setting item 41 of the two-sided copy setting screen 226. As illustrated in FIG. 14, the controller 11 controls the display so that a subject (text information 'Original Orientation') 421 and setting (text information 'Top to Back', in this example) 422 of the related setting item 42 are displayed in the two-sided copy setting screen 226.

In this case, the two-sided copy setting screen 226 is an example of 'one setting screen' of the present invention; the original orientation setting screen 223 is an example of 'another setting screen' of the present invention.

Further, the controller 11 controls the display so that the subject 421 and setting 422 of the related setting item 42 are displayed using (together with, in this example) an object 162 as illustrated in FIG. 14. This allows a user to perceive the subject 421 and setting 422 of the related setting item 42 more intuitively, improving user friendliness. Further, similarly to the objects I3a, I3b, 142, and I5c, the object 162 represents guidance for using the image forming apparatus 1 in addition to the orientation of placement of an original, thereby improving user friendliness. The object 162 is an example of the 'second object' and 'third object' of the present invention.

Further, as illustrated in FIG. 14, the controller 11 controls the display so that a setting change button 423 is displayed in the two-sided copy setting screen 226. The setting change button 423 is for executing a change (screen switchover) from the two-sided copy setting screen 226 to the original orientation setting screen 223. In this example, as illustrated in FIG. 14, the setting change button 423 is configured using an object in the form of a button. The display of the setting change button 423 in the two-sided copy setting screen 226 enables a direct change to the other setting screen (the original orientation setting screen 223) to which the related setting item 42 belongs, without up-and-down movement in the hierarchized structure of the setting menu 2, which will be detailed later with reference to FIG. 16. This reduces the number of operation steps by a user, further improving user friendliness.

Further, as illustrated in FIG. 14, the controller 11 controls the display so that an OK button 226x and a Cancel button 226y are displayed in the two-sided copy setting screen 226 (at a lower right portion and a lower left portion, respectively, in this example). The OK button 226x is for confirming a setting change on the two-sided copy setting screen 226. The Cancel button 226y is for returning to the copy screen 21 without confirming a setting change on the two-sided copy setting screen 226.

As described above, in the image forming apparatus 1 in this embodiment, when one of the setting screens is displayed, if a related setting item 42, which is the basic setting item 41 of another of the setting screens, is associated with the basic setting item 41 of the one setting screen, the controller 11 controls the display so that the subject 421 and setting 422 of the related setting item 42 are displayed in the one setting screen together with the basic setting item 41 of the one setting screen.

Thereby, this embodiment makes it possible to perceive both the subject 421 and setting 422 of the related setting item 42 without a change to the other setting screen. That is, it becomes possible to perceive at a glance, on the one setting screen, the related setting item 42 (the subject 421 and setting 422) as well as the basic setting item 41 of the one setting screen. As a result, for example, erroneous settings on the setting screens or the like are easily prevented. For example, it becomes possible to easily prevent undesired printing results due to an erroneous setting of the original orientation in two-sided copy.

FIG. 15 illustrates a two-sided copy setting screen 106 of the comparative example. While the two-sided copy setting screen 226 of FIG. 14 in this embodiment displays the subject 421 and setting 422 of the related setting item 42, the object 162, and the setting change button 423, the two-sided copy setting screen 106 displays a related setting screen button 106a. Thus, the two-sided copy setting screen 106 has the following drawbacks. The subject 421 and setting 422 of the related setting item 42 are unperceivable on the two-sided copy setting screen 106. In order to perceive them, it is necessary to press the related setting screen button 106a to cause a change to the other setting screen. Unlike the two-sided copy setting screen 226 of this embodiment, with the two-sided copy setting screen 106 of the comparative example, it is not possible to perceive the related setting item 42 (the subject 421 and setting 422) on a single setting screen, resulting in poor user friendliness. (C-2. Specific Display Control Operation For Setting Screens)

FIG. 16 is a flowchart illustrating an example of the operation of display control for the setting screens by the controller 11. FIG. 16 illustrates an example of the display control operation for the setting screens in FIG. 8 (a detailed example of the operation in step S13).

In this example, first, the display controller 111 in the controller 11 determines whether the current setting screen has been invoked from the copy screen 21 (i.e., whether a switchover from the copy screen 21 to the current setting screen has been made) (step S131). In other words, the display controller 111 determines whether the number of (consecutive) changes between the multiple setting screens would reach two times if a change to another setting screen were executed, i.e., whether the number of (consecutive) times a change from one to another of the multiple setting screens occurs would reach two times if the change using the setting change button 423 were executed. At this time, the display controller 111 uses the identification data ID (see FIG. 3) of a screen displayed immediately before the current setting screen to determine whether the above condition is satisfied. The above condition is an example of a 'predetermined condition' of the present invention. The above 'two times' is an example of a 'threshold number of times' of the present invention.

If it is determined that the current setting screen has been invoked from the copy screen 21 (i.e., the number of changes between the multiple setting screens would not reach two times if a change to another setting screen were executed) (Yes in step S131), the procedure proceeds to step S132, described later. On the other hand, if it is determined that the current setting screen has not been invoked from the copy screen 21 (i.e., the number of changes between the multiple setting screens would reach two times if a change to another setting screen were executed) (No in step S131), the display controller 111 controls the display so that the setting change button 423 in the current setting screen is disabled (or is set to a state incapable of being pressed) and the change between the setting screens using the setting change button 423 is disabled (step S133). Then, the procedure proceeds to step S132, described later.

An example of the function of disabling the change between the setting screens using the setting change button 423 will be described below.

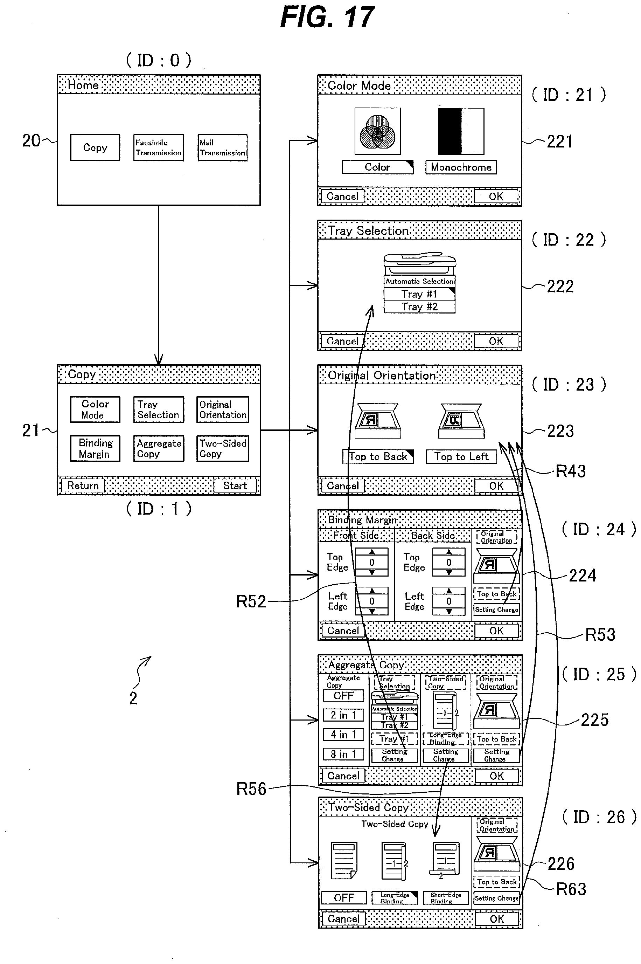

The setting menu 2 in this example has change paths between the multiple setting screens, as illustrated in FIG. 17. Specifically, the setting menu 2 has a change path R52 from the aggregate copy setting screen 225 to the tray selection setting screen 222, a change path R56 from the aggregate copy setting screen 225 to the two-sided copy setting screen 226, a change path R63 from the two-sided copy setting screen 226 to the original orientation setting screen 223, a change path R53 from the aggregate copy setting screen 225 to the original orientation setting screen 223, and a change path R43 from the binding margin setting screen 224 to the original orientation setting screen 223.

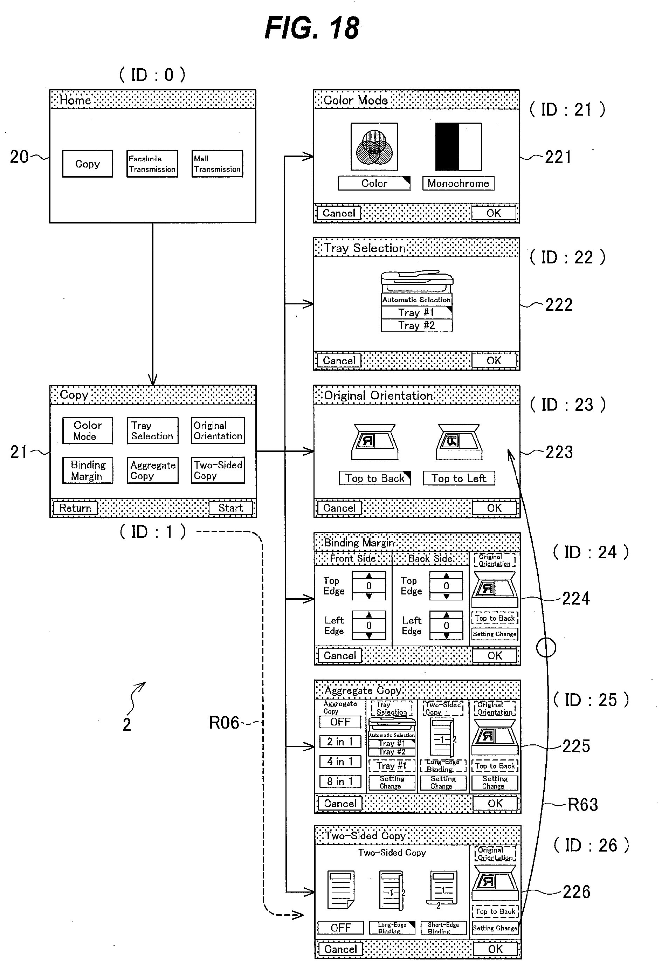

For example, as illustrated in FIG. 18, when the current setting screen is the two-sided copy setting screen 226 and the screen displayed immediately before the current setting screen is the copy screen 21 with the identification data ID '1' (see a starting path R06 in FIG. 18), since the copy screen 21 is not a setting screen, the change of the starting path R06 is not a change (screen switchover) between setting screens. Thus, for example, the change from the two-sided copy setting screen 226 to the original orientation setting screen 223 (i.e., the change of the change path R63) using the setting change button 423 in the two-sided copy setting screen 226 is not disabled (i.e. enabled) (see the circle mark in FIG. 18). The display controller 111 uses the identification data ID (= '1') of the copy screen 21 that is the screen displayed immediately before the two-sided copy setting screen 226 to determine that the two-sided copy setting screen 226, which is the current setting screen, has been invoked from the copy screen 21 (i.e., the number of changes between the multiple setting screens would not reach two times if a change to another setting screen were executed).

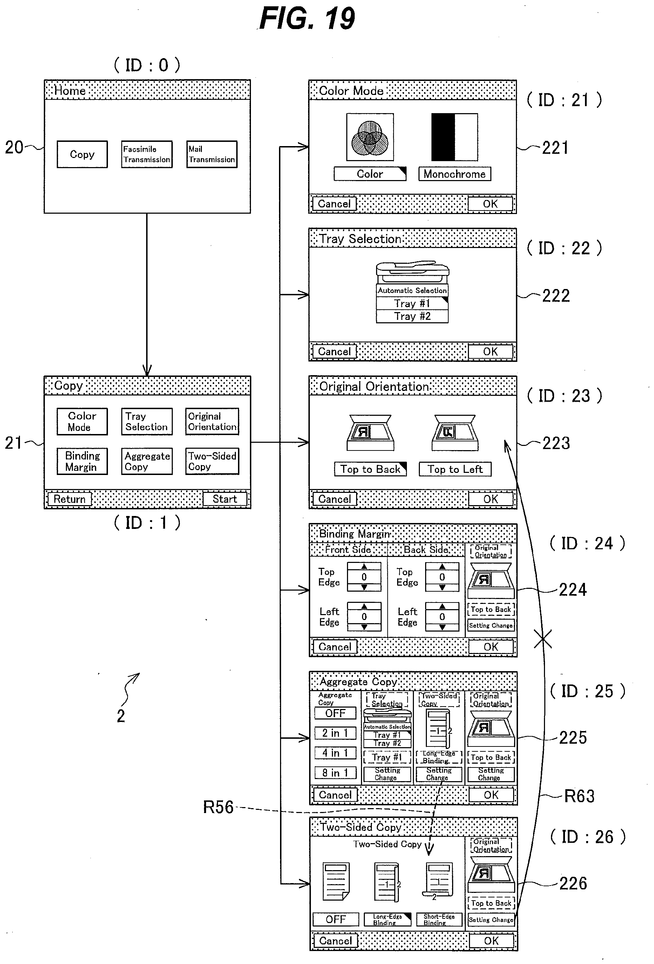

On the other hand, for example, as illustrated in FIG. 19, when the current setting screen is the two-sided copy setting screen 226 and the screen displayed immediately before the current setting screen is the aggregate copy setting screen 225 with the identification data ID '25' (see the change path R56), since the aggregate copy setting screen 225 is one of the setting screens, the change of the change path R56 is a change (first change) between setting screens. Thus, for example, the change from the two-sided copy setting screen 226 to the original orientation setting screen 223 (i.e., the change of the change path R63) using the setting change button 423 in the two-sided copy setting screen 226 is disabled (i.e. not enabled) (see the cross mark in FIG. 19). The display controller 111 uses the identification data ID (= '25') of the aggregate copy setting screen 225 that is a screen (setting screen) displayed immediately before the two-sided copy setting screen 226 to determine that the two-sided copy setting screen 226, which is the current setting screen, has not been invoked from the copy screen 21 (i.e., the number of changes between the multiple setting screens would reach two times if a change to another setting screen were executed).

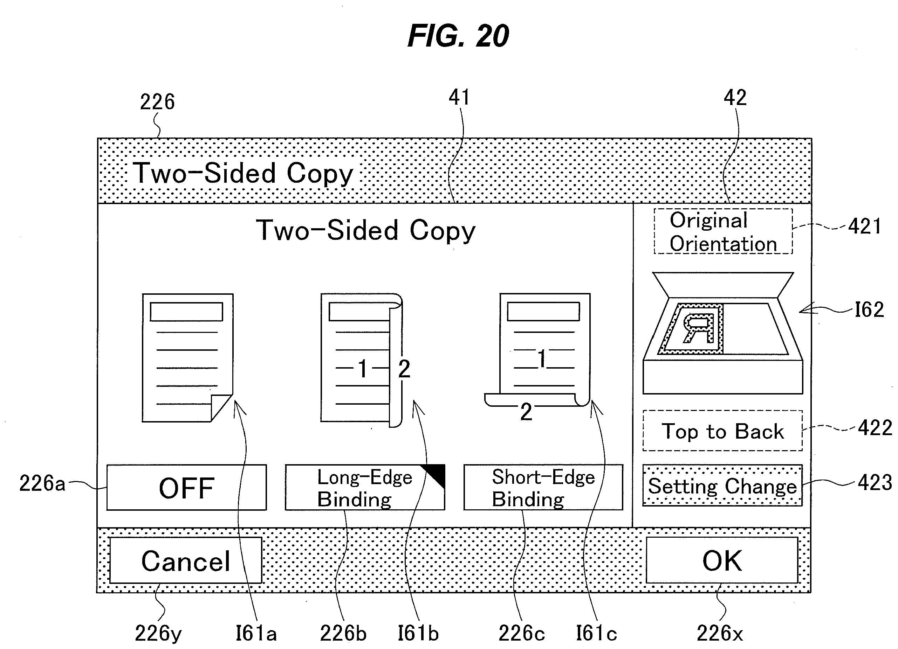

When the change between the setting screens using the setting change button 423 is disabled, the display controller 111 controls the display as illustrated in FIG. 20, which illustrates an example of display of the two-sided copy setting screen 226. In this example, the display controller 111 controls the display so that the setting change button 423 in the two-sided copy setting screen 226 is disabled (or is set to a state incapable of being pressed).

As above, if it is determined that the current setting screen has not been invoked from the copy screen 21 (i.e., the number of changes between the multiple setting screens would reach two times if a change to another setting screen were executed), the display controller 111 controls the display so that the change between the setting screens using the setting change button 423 is disabled. This reduces the possibility of the following user's confusion, improving user friendliness. If changes between setting screens were free (or never disabled), a user might be confused as follows, for example: the user might be unable to recognize at which of the levels in the setting menu 2 the current screen is, which of the screens in the setting menu 2 the current screen is, or a path to return to the home screen 20; the user might be unable to make consistent with a previously set value with respect to the same related setting item due to circulation between setting screens; the user might unintentionally overwrite a set value with a different value.

Further, in this embodiment, the display controller 111 determines whether the current setting screen has been invoked from the copy screen 21 (i.e., the number of changes between the multiple setting screens would reach two times if a change to another setting screen were executed), by using the identification data ID of the screen displayed immediately before the current setting screen. This can reduce a capacity (memory capacity) for storing the identification data ID to use, in comparison with the method of a first modification, described later.

Referring again to FIG. 16, in step S132, the display controller 111 determines, on the basis of the operation signal Sm, whether the setting change button 423 in the setting screen has been pressed by a user. If it is determined that the setting change button 423 has been pressed (Yes in step S132), the display controller 111 controls the display so that the other setting screen corresponding to the pressed setting change button 423 is displayed (step S134). Then, the procedure returns to step S131.

On the other hand, if it is determined that the setting change button 423 has not been pressed (No in step S132), the display controller 111 determines, on the basis of the operation signal Sm, the OK button in the setting screen has been pressed by a user (step S135). If it is determined that the OK button has been pressed (Yes in step S135), the display controller 111 requests the job controller 113 to apply a change of the setting of the basic setting item 41 to the current parameter information 121. On request, the job controller 113 applies a change of the setting to the current parameter information 121 managed by the parameter manager 112 (step S136). Then, the display controller 111 controls the display to return to the copy screen 21 (i.e., display the copy screen 21 again), ending the display control operation for the setting screen in FIG. 16. However, when the current setting screen has been invoked from another setting screen in step S134 in the display control operation for the other setting screen, the display controller 111 controls the display to return to the other setting screen from the current setting screen (i.e., display the previous other setting screen again), ending the display control operation for the current setting screen in FIG. 16.

On the other hand, if it is determined that the OK button has not been pressed (No in step S135), the display controller 111 determines, on the basis of the operation signal Sm, whether the Cancel button in the setting screen has been pressed by a user (step S137). If it is determined that the Cancel button has not been pressed (No in step S137), the procedure returns to step S132. On the other hand, if it is determined that the Cancel button has been pressed (Yes in step S137), the display controller 111 controls the display to return to the copy screen 21 or the other setting screen from which the current setting screen has been invoked, without applying a change of the setting of the basic setting item 41 to the current parameter information 121, ending the display control operation for the current setting screen in FIG. 16.

As described above, in this embodiment, in displaying one of the setting screens, when the basic setting item 41 of the one setting screen is associated with a related setting item 42 that is the basic setting item 41 of another setting screen, the controller 11 controls the display so that the subject 421 and setting 422 of the related setting item 42 are displayed in the one setting screen together with the basic setting item 41 of the one setting screen. This allows a user to perceive both the subject 421 and setting 422 of the related setting item 42 without a change to the other setting screen. Thus, the content of the related setting item 42 can be perceived without an operation for moving to the other setting screen. This improves user friendliness.

### <2. Modifications>

Next, modifications (first to fourth modifications) of the above embodiment will be described. Descriptions of parts that are the same as in the embodiment will be omitted or simplified in the description below, and the same reference characters will be used for elements that are the same as or correspond to those in the embodiment.

### <First Modification>

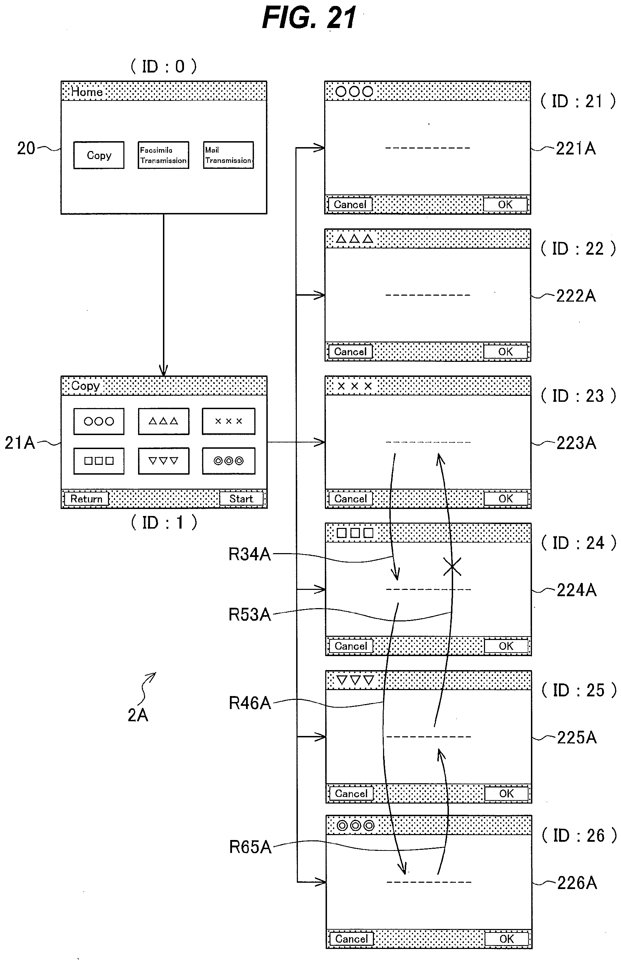

FIG. 21 schematically illustrates an example of the configuration of a setting menu 2A in the first modification. The setting menu 2A in this modification includes a home screen 20 at an uppermost level, a copy screen 21A at an intermediate level, and multiple (six) various setting screens 221A, 222A, 223A, 224A, 225A, and 226A at a lowermost level. Unlike the above embodiment, each of the copy screen 21A and the setting screens 221A, 222A, 223A, 224A, 225A, and 226A is illustrated in an abstracted (or a generalized) manner. Each of the setting screens 221A, 222A, 223A, 224A, 225A, and 226A is an example of the 'setting screen' of the present invention.

Unlike the above embodiment, the controller 11 in this modification disables the change between the setting screens using a setting change button 423 in the following manner. The display controller 111 in the controller 11 controls the display so that when it is determined that a sequence of display of the multiple setting screens (or a sequence in which the multiple setting screens are displayed) would become a predetermined sequence if a change to another setting screen (or the change using the setting change button 423) were executed, the change between the setting screens using the setting change button 423 is disabled. In other words, the display controller 111 controls the display so that when it is determined that a path of changes between the multiple setting screens would become a predetermined path if a change to another setting screen were executed, the change between the setting screens using the setting change button 423 is disabled. Specifically, in this modification, the predetermined sequence (or path) is a closed (or loop) sequence (or path), as described below. The above condition is an example of the 'predetermined condition' of the present invention.

Specifically, in this example, as illustrated in FIG. 21, in the setting menu 2A, after the setting screens 223A, 224A, 226A, and 225A have been displayed in this order, if a change from the setting screen 225A to the setting screen 223A were executed, the sequence of display of the multiple setting screens would become a closed sequence. Therefore, the change from the setting screen 225A to the setting screen 223A is disabled. In other words, a path including the change path R34A, R46A, R65A, and R53A in this order is a closed path that starts from and returns to the setting screen 223A. Therefore, in this case, the change of the change path R53, which is the final change, is disabled (i.e., not enabled) (see the cross mark in FIG. 21).

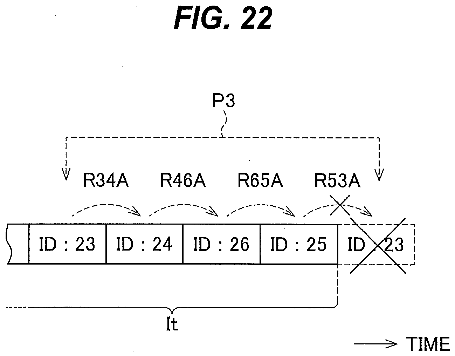

As illustrated in FIG. 22, the display controller 111 uses a temporal sequence It of identification data ID corresponding to the sequence of display of the multiple setting screens (or the history of changes between the multiple setting screens) to determine whether the sequence of display of the multiple setting screens would become the predetermined sequence (a closed sequence, in this example) if a change to another setting screen were executed. In this example, as indicated by double-headed arrow P3 in FIG. 22, the display controller 111 determines it according to whether the other setting screen has identification data ID identical to the identification data ID (= '23') of the setting screen 223A, which is the start point. As such, this modification uses the temporal sequence It of identification data ID to make a determination. Thus, in comparison with the method in the above embodiment, although this modification requires a larger capacity (memory capacity) for storing identification data ID to use, it makes it possible to prevent failure of the system (or processing of the controller 11) more certainly.

This modification can also provide, through substantially the same operation, the same advantages as in the above embodiment. That is, for example, disabling the change between the setting screens using the setting change button 423 makes it possible to reduce the possibility of user's confusion when changes between the setting screens are free (never disabled), further improving user friendliness.

Further, since this modification is configured to disable the change between the setting screens when it is determined that the display sequence would become a predetermined sequence (e.g., a closed path) if the change were executed, it makes it possible to set the disabling condition flexibly corresponding to the structure of the setting menu, in comparison with a case of using a threshold number of times to disable the change as in the embodiment.

### <Second Modification>

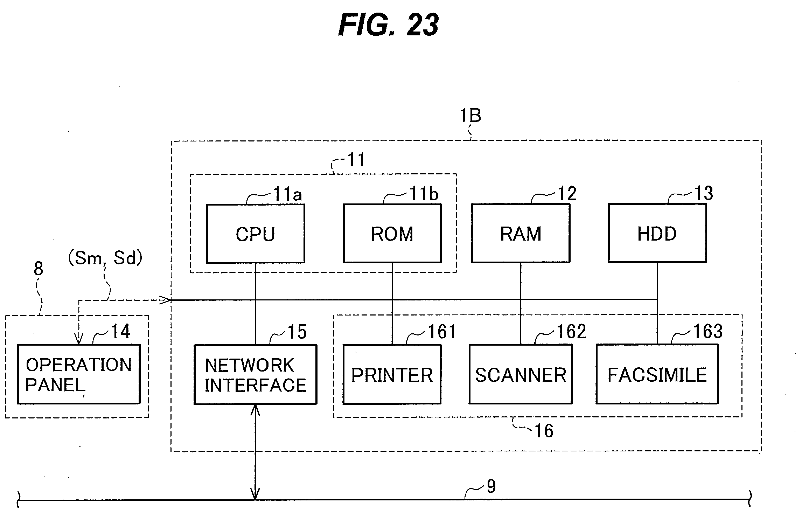

FIG. 23 is a block diagram schematically illustrating an example of a physical configuration of an image forming apparatus 1B of the second modification. This modification is substantially the same as the embodiment except that while the embodiment has the operation panel 14 in the image forming apparatus 1 as illustrated in FIGs. 1 and 2, this modification has an operation panel 14 in an external operation terminal 8, described below.

Specifically, as illustrated in FIG. 23, the operation panel 14 is not included in the image forming apparatus 1B, but in the external operation terminal 8, which is a device separated from the image forming apparatus 1B. The image forming apparatus 1B has a configuration obtained by removing the operation panel 14 from the image forming apparatus 1. The external operation terminal 8 with the operation panel 14 and the image forming apparatus 1B constitute an image forming system. The external operation terminal 8 transmits to and receives from the image forming apparatus 1B signals (the operation signal Sm, display control signal Sd, and the like) via a wired or wireless communication, for example. The external operation terminal 8 includes, for example, a smartphone and a tablet device.

This modification can also provide, through substantially the same operation, the same advantages as in the above embodiment.

### <Third and Fourth Modifications>

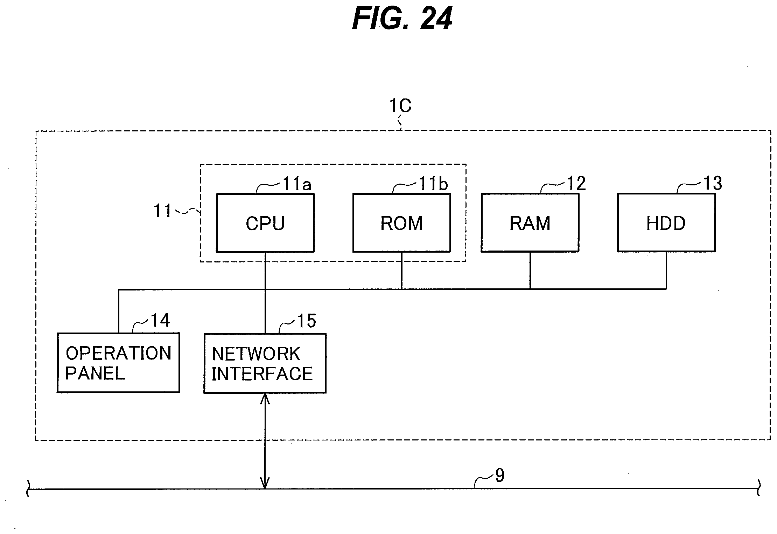

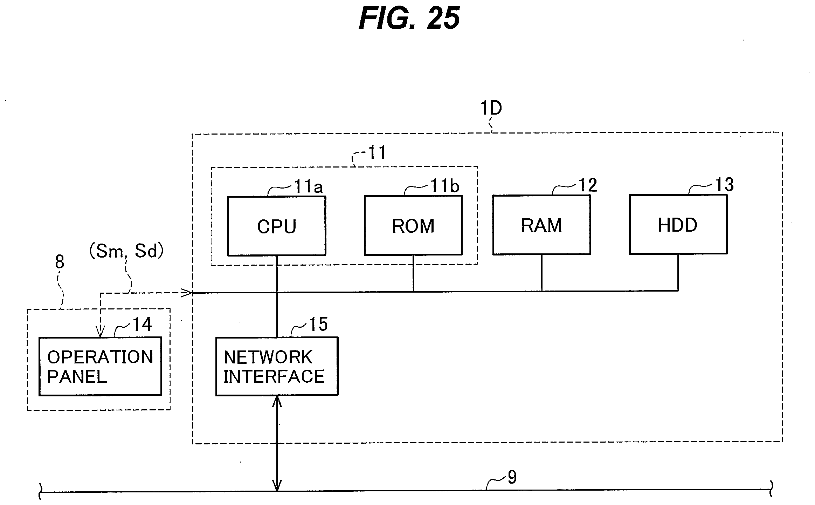

FIG. 24 is a block diagram schematically illustrating an example of a physical configuration of an image processing apparatus 1C of the third modification. FIG. 25 is a block diagram schematically illustrating an example of a physical configuration of an image processing apparatus 1D of the fourth modification.

The image processing apparatuses 1C and 1D of the third and fourth modifications are respectively substantially the same as the image forming apparatuses 1 and 1B except that while the image forming apparatuses 1 and 1B have the image forming unit 16, the image processing apparatuses 1C and 1D have no such image forming unit.

Specifically, the image processing apparatus 1C in FIG. 24 is substantially the same as the image forming apparatus 1 of the embodiment illustrated in FIGs. 1 and 2 except that it does not have the image forming unit 16.

The image processing apparatus 1D in FIG. 25 is substantially the same as the image forming apparatus 1B of the second modification illustrated in FIG. 23 except that it does not have the image forming unit 16. The external operation terminal 8 with the operation panel 14 and the image processing apparatus 1D of this modification constitute an image processing system.

Each of the image processing apparatuses 1C and 1D includes, for example, a personal computer (PC) and a tablet device.

Each of the image processing apparatuses 1C and 1D can provide, through substantially the same operation, the same advantages as in the above embodiment.

### <3. Other Modifications>

While the preferred embodiment and modifications of the present invention have been illustrated in detail, it should be apparent that other modifications and improvements may be made to the invention without departing from the spirit and scope of the invention as described in the following claims.

For example, the configurations of the setting menu, setting screens, objects, text information, and the like are not limited to the examples illustrated in the above embodiment and modifications.

Further, the above embodiment and modifications illustrate a case where the controller 11 is configured by the CPU 11a and ROM 11b storing a set of programs, but this is not mandatory. For example, instead of the ROM 11b, the set of programs may be stored in another storage device, such as the HDD 13, that is both readable and writable.

Further, the condition (or predetermined condition) for disabling the change (or screen switchover) between the setting screens using the change operation portion (or setting change button 423) is not limited to the examples illustrated in the above embodiment and modifications, and may be another condition. The threshold number of times is not limited to two times as illustrated in the above embodiment, and may be set to an arbitrary number of times such as three times. The predetermined sequence is not limited to a closed sequence as illustrated in the first modification, and may be a sequence that may cause inconsistency between setting items or the like.

Further, the above embodiment and modifications illustrate a method of causing a change (screen switchover) to another setting screen using a setting change button 423, but this is not mandatory. For example, instead of displaying the setting change button 423 in a setting screen, the setting screen may be configured to allow a user to directly set a related setting item on the setting screen (without moving to the other setting screen). In this case, for example, the setting screen may display a screen for setting the related setting item so as to allow a user to set the related setting item as well as the basic setting item of the setting screen. Such a screen may be obtained by partially simplifying the setting screen to which the related setting item belongs. Such a configuration allows a user to perceive the content of the related setting item and change the setting of the related setting item on the single setting screen, further improving user friendliness.

Further, the above embodiment and modifications illustrate a case where an image forming apparatus or an image processing apparatus includes an operation panel, and a case where an external operation terminal includes an operation panel. However, in the former case, the image forming apparatus or image processing apparatus may be configured to receive an operation signal from an external operation terminal. That is, the image forming apparatus or image processing apparatus may be configured to receive and use operation signals from both the external operation terminal and the built-in operation panel.

Further, the series of processes described in each of the above embodiment and modifications may be executed by hardware (or hardware circuitry), or software (or a software program). The software may include a program group for causing a computer to execute the respective functions. Each program in the program group may be previously built in and used by the computer, or may be installed from a network or a recording medium into and used by the computer.

Further, each of the above embodiment and the first and second modifications illustrates, as an example of an 'image forming apparatus' of the present invention, an image forming apparatus that functions as a multi-function peripheral having a print function, a scan function, and a facsimile function, but this is not mandatory. The present invention is applicable to other types of image forming apparatuses such as a printer, a scanner, a facsimile, and a copier.

## Claims

1. An image processing apparatus (1, 1C) comprising:
a display (14); and
a controller (11) that causes the display (14) to display a first setting screen (224, 225) and a second setting screen (223), the first setting screen (224, 225) including a first setting item name and a plurality of first settings, the second setting screen (223) including a second setting item name and a plurality of second settings related to the plurality of first settings,
**characterized in that**:
the controller (11) causes the display (14) to display, together with the first setting screen (224, 225), the second setting item name (421) of the second setting screen (223), one of the plurality of second settings (422), and a change operation portion (423) for changing from the first setting screen (224, 225) to the second setting screen (223) .

2. The image processing apparatus (1, 1C) of claim 1, wherein when it is determined that a predetermined condition is satisfied, the controller (11) causes the display (14) to display the change operation portion (423) in such a manner as to be inoperable.

3. The image processing apparatus (1, 1C) of claim 2, wherein:
the controller (11) causes the display (14) to display a plurality of setting screens (221 to 226) including the first setting screen (224, 225) and the second setting screen (223), and
the predetermined condition is that the number of changes between the plurality of setting screens (221 to 226) would reach a predetermined threshold number of times if the change using the change operation portion (423) were executed.

4. The image processing apparatus (1, 1C) of claim 2, wherein:
the controller (11) causes the display (14) to display a plurality of setting screens (221 to 226) including the first setting screen (224, 225) and the second setting screen (223), and
the predetermined condition is that a sequence of display of the plurality of setting screens (221 to 226) would become a predetermined sequence if the change using the change operation portion (423) were executed.

5. The image processing apparatus (1, 1C) of claim 4, wherein the predetermined sequence is a closed sequence.

6. The image processing apparatus (1, 1C) of any one of claims 1 to 5, wherein the controller (11) causes the display (14) to display, as the change operation portion (423), a first object in a form of a button.

7. The image processing apparatus (1, 1C) of any one of claims 1 to 6, wherein the controller (11) causes the display (14) to display, together with the first setting screen (224, 225), in addition to the second setting item name (421), the one of the plurality of second settings (422), and the change operation portion (423), a setting image (142, I5c) relating to the second setting item name (421) .

8. The image processing apparatus (1, 1C) of any one of claims 1 to 7, wherein the controller (11) causes the display (14) to display, on the first setting screen (224, 225), the second setting item name (421), the one of the plurality of second settings (422), and the change operation portion (423).

9. The image processing apparatus (1, 1C) of any one of claims 1 to 8, wherein the controller (11) causes the display (14) to display a setting menu with a hierarchical structure, the setting menu including a home screen (20), the first setting screen (224, 225), and the second setting screen (223), the home screen (20) being at an uppermost level in the hierarchical structure, each of the first setting screen (224, 225) and the second setting screen (223) being at a lower level below the home screen (20).

10. The image processing apparatus (1, 1C) of claim 9, wherein the first setting screen (224, 225) and the second setting screen (223) are at the same level in the hierarchical structure.

11. The image processing apparatus (1, 1C) of any one of claims 1 to 10, further comprising an operation panel (14) including the display (14).

12. The image processing apparatus (1) of any one of claims 1 to 11, wherein the image processing apparatus (1) is an image forming apparatus.

13. The image processing apparatus (1) of claim 12, wherein the first setting screen (224) is a setting screen for two-sided copy or a setting screen for a binding margin, and the second setting screen (223) is a setting screen for an orientation of an original.

14. The image processing apparatus (1) of claim 12, wherein the first setting screen (225) is a setting screen for aggregate copy, and the second setting screen (223) is one of a setting screen for tray selection, a setting screen for two-sided copy, and a setting screen for an orientation of an original.

## Patentansprüche

1. Bildverarbeitungsvorrichtung (1, 1C), umfassend:
eine Anzeige (14); und
eine Steuerung (11), die die Anzeige (14) veranlasst, einen ersten Einstellbildschirm (224, 225) und einen zweiten Einstellbildschirm (223) anzuzeigen, wobei der erste Einstellbildschirm (224, 225) einen ersten Einstellelementnamen und eine Vielzahl von ersten Einstellungen beinhaltet, und der zweite Einstellbildschirm (223) einen zweiten Einstellelementnamen und eine Vielzahl von zweiten Einstellungen, die mit der Vielzahl von ersten Einstellungen in Beziehung stehen, beinhaltet, **dadurch gekennzeichnet, dass**:
die Steuerung (11) die Anzeige (14) veranlasst, zusammen mit dem ersten Einstellbildschirm (224, 225) den zweiten Einstellelementnamen (421) des zweiten Einstellbildschirms (223), eine von der Vielzahl zweiter Einstellungen (422) und einen Änderungsvorgangabschnitt (423) zum Wechseln von dem ersten Einstellbildschirm (224, 225) zu dem zweiten Einstellbildschirm (223) anzuzeigen.

2. Bildverarbeitungsvorrichtung (1, 1C) nach Anspruch 1, bei dem, wenn bestimmt wird, dass eine vorbestimmte Bedingung erfüllt ist, die Steuerung (11) die Anzeige (14) veranlasst, den Änderungsvorgangabschnitt (423) auf eine Weise anzuzeigen, dass er funktionsunfähig ist.

3. Bildverarbeitungsvorrichtung (1, 1C) nach Anspruch 2, wobei:
die Steuerung (11) die Anzeige (14) veranlasst, eine Vielzahl von Einstellbildschirmen (221 bis 226) anzuzeigen, die den ersten Einstellbildschirm (224, 225) und den zweiten Einstellbildschirm (223) beinhaltet, und
die vorgegebene Bedingung jene ist, dass die Anzahl von Wechseln zwischen der Vielzahl von Einstellbildern (221 bis 226) eine vorgegebene Schwellenwertanzahl erreichen würde, wenn der Wechsel unter Verwendung des Änderungsvorgangabschnitts (423) ausgeführt würde.

4. Bildverarbeitungsvorrichtung (1, 1C) nach Anspruch 2, wobei:
die Steuerung (11) die Anzeige (14) veranlasst, eine Vielzahl von Einstellbildschirmen (221 bis 226) anzuzeigen, die den ersten Einstellbildschirm (224, 225) und den zweiten Einstellbildschirm (223) beinhaltet, und
die vorbestimmte Bedingung jene ist, dass eine Anzeigeabfolge der Vielzahl von Einstellbildschirmen (221 bis 226) eine vorbestimmte Abfolge werden würde, wenn der Wechsel unter Verwendung des Änderungsvorgangsabschnitts (423) ausgeführt würde.

5. Bildverarbeitungsvorrichtung (1, 1C) nach Anspruch 4, wobei die vorbestimmte Abfolge eine geschlossene Abfolge ist.

6. Bildverarbeitungsvorrichtung (1, 1C) nach einem der Ansprüche 1 bis 5, wobei die Steuerung (11) die Anzeige (14) veranlasst, als Änderungsvorgangabschnitt (423) ein erstes Objekt in Form einer Taste anzuzeigen.

7. Bildverarbeitungsvorrichtung (1, 1C) nach einem der Ansprüche 1 bis 6, wobei die Steuerung (11) die Anzeige (14) veranlasst, zusammen mit dem ersten Einstellbildschirm (224, 225) zusätzlich zu dem zweiten Einstellelementnamen (421), der einen der Vielzahl von zweiten Einstellungen (422) und dem Änderungsvorgangabschnitt (423) ein Einstellbild (I42, I5c) anzuzeigen, das sich auf den zweiten Einstellelementnamen (421) bezieht.

8. Bildverarbeitungsvorrichtung (1, 1C) nach einem der Ansprüche 1 bis 7, wobei die Steuerung (11) die Anzeige (14) veranlasst, auf dem ersten Einstellbildschirm (224, 225) den zweiten Einstellelementnamen (421), die eine der Vielzahl von zweiten Einstellungen (422) und den Änderungsvorgangabschnitt (423) anzuzeigen.

9. Bildverarbeitungsvorrichtung (1, 1C) nach einem der Ansprüche 1 bis 8, wobei die Steuerung (11) die Anzeige (14) veranlasst, ein Einstellmenü mit einer hierarchischen Struktur anzuzeigen, wobei das Einstellmenü einen Startbildschirm (20), den ersten Einstellbildschirm (224, 225) und den zweiten Einstellbildschirm (223) beinhaltet, wobei der Startbildschirm (20) auf einer obersten Ebene in der hierarchischen Struktur ist, wobei sowohl der erste Einstellbildschirm (224, 225) als auch der zweite Einstellbildschirm (223) auf einer unteren Ebene unterhalb des Startbildschirms (20) ist.

10. Bildverarbeitungsvorrichtung (1, 1C) nach Anspruch 9, wobei der erste Einstellbildschirm (224, 225) und der zweite Einstellbildschirm (223) in der hierarchischen Struktur auf der gleichen Ebene sind.

11. Bildverarbeitungsvorrichtung (1, 1C) nach einem der Ansprüche 1 bis 10, ferner umfassend ein Bedienfeld (14), das die Anzeige (14) beinhaltet.

12. Bildverarbeitungsvorrichtung (1) nach einem der Ansprüche 1 bis 11, wobei die Bildverarbeitungsvorrichtung (1) eine Bilderzeugungsvorrichtung ist.

13. Bildverarbeitungsvorrichtung (1) nach Anspruch 12, wobei der erste Einstellbildschirm (224) ein Einstellbildschirm für eine zweiseitige Kopie oder ein Einstellbildschirm für einen Binderand ist, und der zweite Einstellbildschirm (223) ein Einstellbildschirm für eine Ausrichtung eines Originals ist.

14. Bildverarbeitungsvorrichtung (1) nach Anspruch 12, wobei der erste Einstellbildschirm (225) ein Einstellbildschirm für eine Gesamtkopie ist, und der zweite Einstellbildschirm (223) einer von einem Einstellbildschirm zur Schachtauswahl, einem Einstellbildschirm für eine zweiseitige Kopie und einem Einstellbildschirm für die Ausrichtung eines Originals ist.

## Revendications

1. Appareil de traitement d'image (1, 1C) comprenant :
un dispositif d'affichage (14) ; et
un dispositif de commande (11) qui amène le dispositif d'affichage (14) à afficher un premier écran de réglage (224, 225) et un second écran de réglage (223), le premier écran de réglage (224, 225) comprenant un premier nom d'élément de réglage et une pluralité de premiers réglages, le second écran de réglage (223) comprenant un second nom d'élément de réglage et une pluralité de seconds réglages liés à la pluralité de premiers réglages, **caractérisé en ce que** :
le dispositif de commande (11) amène le dispositif d'affichage (14) à afficher, conjointement avec le premier écran de réglage (224, 225), le second nom d'élément de réglage (421) du second écran de réglage (223), l'un de la pluralité de seconds réglages (422), et une partie d'opération de changement (423) pour passer du premier écran de réglage (224, 225) au second écran de réglage (223).

2. Appareil de traitement d'image (1, 1C) selon la revendication 1, lorsqu'une condition prédéfinie est déterminée comme étant satisfaite, ledit dispositif de commande (11) amenant le dispositif d'affichage (14) à afficher la partie d'opération de changement (423) de manière à être inutilisable.

3. Appareil de traitement d'image (1, 1C) selon la revendication 2,
ledit dispositif de commande (11) amenant le dispositif d'affichage (14) à afficher une pluralité d'écrans de réglage (221 à 226) comprenant le premier écran de réglage (224, 225) et le second écran de réglage (223), et
ladite condition prédéfinie étant que le nombre de changements entre la pluralité d'écrans de réglage (221 à 226) atteindrait un nombre seuil prédéfini de fois si le changement utilisant la partie d'opération de changement (423) était exécuté.

4. Appareil de traitement d'image (1, 1C) selon la revendication 2,
ledit dispositif de commande (11) amenant le dispositif d'affichage (14) à afficher une pluralité d'écrans de réglage (221 à 226) comprenant le premier écran de réglage (224, 225) et le second écran de réglage (223), et
la condition prédéfinie étant qu'une séquence d'affichage de la pluralité d'écrans de réglage (221 à 226) deviendrait une séquence prédéfinie si le changement utilisant la partie d'opération de changement (423) était exécuté.

5. Appareil de traitement d'image (1, 1C) selon la revendication 4, ladite séquence prédéfinie étant une séquence fermée.

6. Appareil de traitement d'image (1, 1C) selon l'une quelconque des revendications 1 à 5, ledit dispositif de commande (11) amenant le dispositif d'affichage (14) à afficher, en tant que partie d'opération de changement (423), un premier objet sous la forme d'un bouton.

7. Appareil de traitement d'image (1, 1C) selon l'une quelconque des revendications 1 à 6, ledit dispositif de commande (11) amenant le dispositif d'affichage (14) à afficher, conjointement avec le premier écran de réglage (224, 225), en plus du second nom d'élément de réglage (421), celui de la pluralité de seconds réglages (422) et la partie d'opération de changement (423), une image de réglage (I42, I5c) relative au second nom d'élément de réglage (421).

8. Appareil de traitement d'image (1, 1C) selon l'une quelconque des revendications 1 à 7, ledit dispositif de commande (11) amenant le dispositif d'affichage (14) à afficher, sur le premier écran de réglage (224, 225), le second nom d'élément de réglage (421), celui de la pluralité de seconds réglages (422) et la partie d'opération de changement (423).

9. Appareil de traitement d'image (1, 1C) selon l'une quelconque des revendications 1 à 8, ledit dispositif de commande (11) amenant le dispositif d'affichage (14) à afficher un menu de réglage avec une structure hiérarchique, le menu de réglage comprenant un écran d'accueil (20), le premier écran de réglage (224, 225), et le second écran de réglage (223), l'écran d'accueil (20) étant à un niveau supérieur dans la structure hiérarchique, chacun du premier écran de réglage (224, 225) et du second écran de réglage (223) se trouvant à un niveau inférieur sous l'écran d'accueil (20).

10. Appareil de traitement d'image (1, 1C) selon la revendication 9, ledit premier écran de réglage (224, 225) et ledit second écran de réglage (223) étant au même niveau dans la structure hiérarchique.

11. Appareil de traitement d'image (1, 1C) selon l'une quelconque des revendications 1 à 10, comprenant en outre un panneau de commande (14) comprenant le dispositif d'affichage (14).

12. Appareil de traitement d'image (1) selon l'une quelconque des revendications 1 à 11, ledit appareil de traitement d'image (1) étant un appareil de formation d'image.

13. Appareil de traitement d'image (1) selon la revendication 12, ledit premier écran de réglage (224) étant un écran de réglage pour une copie recto verso ou un écran de réglage pour une marge de reliure, et ledit second écran de réglage (223) étant un écran de réglage pour l'orientation d'un original.

14. Appareil de traitement d'image (1) selon la revendication 12,
ledit premier écran de réglage (225) étant un écran de réglage pour la copie agrégée, et ledit second écran de réglage (223) étant l'un d'un écran de réglage pour la sélection de bac, un écran de réglage pour la copie recto verso et un écran de réglage pour l'orientation d'un original.
